(19) Europäisches Patentamt
European Patent Office
Office européen des brevets

(11) **EP 2 706 837 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(51) Int Cl.:
***A01J 5/04*** *(2006.01)*     ***A01J 11/04*** *(2006.01)*

(21) Anmeldenummer: **12720111.9**

(22) Anmeldetag: **09.05.2012**

(86) Internationale Anmeldenummer:
**PCT/EP2012/001994**

(87) Internationale Veröffentlichungsnummer:
**WO 2012/152441 (15.11.2012 Gazette 2012/46)**

(54) **VORRICHTUNG ZUM DURCHFÜHREN MINDESTENS EINER MESSUNG UND ZUR ENTNAHME VON MILCHPROBEN AUS EINER MELKMASCHINE**

DEVICE FOR CARRYING OUT AT LEAST ONE MEASUREMENT AND FOR REMOVING MILK SAMPLES FROM A MILKING MACHINE

DISPOSITIF PERMETTANT DE PRENDRE AU MOINS UNE MESURE ET DE PRÉLEVER DES ÉCHANTILLONS DE LAIT DANS UNE TRAYEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2011 DE 102011100924**

(43) Veröffentlichungstag der Anmeldung:
**19.03.2014 Patentblatt 2014/12**

(73) Patentinhaber: **Lactocorder AG**
**9052 Niederteufen (CH)**

(72) Erfinder: **HOEFELMAYR, Tilman**
**CH-9052 Niederteufen (CH)**

(74) Vertreter: **Grünecker Patent- und Rechtsanwälte PartG mbB**
**Leopoldstraße 4**
**80802 München (DE)**

(56) Entgegenhaltungen:
**EP-A1- 0 134 836**     **EP-A2- 0 643 292**
**DD-A1- 252 531**     **GB-A- 1 564 141**

## Beschreibung

Die vorliegende Erfindung bezieht sich auf die Melktechnik, insbesondere auf eine Vorrichtung zum Durchführen von Messungen an Milch und zum Entnehmen von Milchproben während eines Melkvorgangs.

In der modernen Landwirtschaft ist es wünschenswert, die Eigenschaften der von einem Tier (beispielsweise einer Kuh, einer Ziege oder einem Schaf) abgemolkenen Milch zu kennen. Die Milchmenge und die Konzentration bestimmter Inhaltsstoffe der Milch, insbesondere die Konzentrationen von Eiweiß und Fett sowie die Zellzahl in der Milch, bilden eine Grundlage für den Milchpreis, der dem Landwirt bezahlt wird. Zu diesem Zweck werden Proben der Milch untersucht. Milchproben können außerdem dazu verwendet werden, den Zustand eines Tiers, insbesondere seine Leistungsfähigkeit und/oder seine Gesundheit, zu beurteilen und als Basis für die Zuchtauswahl in Genetikprogrammen dienen.

Ein einfaches Verfahren zur Probenentnahme aus der gesamten von einem Landwirt abgelieferten Milch ist das Entnehmen einer Probe mithilfe eines langstieligen Schöpflöffels aus dem mit Kühlung und Rührwerk ausgerüsteten Sammeltank des Landwirts. Wegen des Aufrahmens der Milch muss die Milch vor der Probenentnahme gut durchgerührt werden, um eine homogene Mischmilch zu erhalten, was aber mit dem Nachteil verbunden ist, dass es beim Rühren zu einer Schädigung der in der Milch enthaltenen Fettkügelchen und damit zu einer Qualitätsminderung durch Lipolyse kommen kann.

Alternativ kann eine Milchprobe auch während des Umpumpens der Milch aus dem Sammeltank des Landwirts in den Milchtankwagen der Molkerei entnommen werden. Zu diesem Zweck werden vollautomatische Probenentnahmevorrichtungen verwendet, die jedoch meist sehr komplex und aufwändig sind. Außerdem wird, ebenso wie bei einer Probenentnahme aus dem Sammelbehälter des Landwirts, eine Mischung der Milch von mehreren Tieren untersucht. Für eine Untersuchung des Zustands eines Tiers anhand einer Milchprobe ist jedoch eine Milchprobe vom einzelnen Tier wünschenswert.

Eine Vorrichtung zur Milchleistungsermittlung und zur Frühdiagnose von Gesundheitsstörungen nach dem Stand der Technik, die eine Entnahme von Milchproben vom Einzeltier ermöglicht, wird in der DD 252 531 A1 offenbart. Die Vorrichtung umfasst einen Zyklon und eine Einrichtung zur wahlweisen Entnahme von Gemelksproben. In den senkrecht stehenden Zyklon, der an seinem oberen Ende einen waagrechten Milcheinlauf aufweist, ist eine in der Längsachse des Zyklons gelegene Lichtquelle eingefügt. Am Zyklonumfang befinden sich Sensoren zur Untersuchung der Milch, die Lichtsensoren umfassen. Vor dem Auslasstrichter des Zyklons und unterhalb, d.h. stromabwärts, der Sensoren befindet sich eine Ringnut, die radial nach außen verläuft, und durch die mittels eines Vakuums eine Milchprobe abgesaugt werden kann.

Im unteren Bereich des Zyklons, in dem sich die Ringnut zur Probenentnahme befindet, ist die umlaufende Bewegung der Milch bereits soweit abgebremst, dass keine nennenswerte Zentrifugalkraft mehr vorhanden ist, die die Milch in die Ringnut treiben würde. Stattdessen wirken Adhäsions- und Kohäsionskräfte, die von verschiedenen Faktoren wie der Milchzusammensetzung, dem Material und der Oberflächenbeschaffenheit des Zyklons und dessen Reinigungszustand abhängig sind. Diese Faktoren sind in der Praxis nicht exakt kontrollierbar.

Außerdem wirkt das Vakuum am gesamten Umfang der Ringnut. Die Ringnut ist jedoch gemäß der DD 252 531 A1 nur teilweise von Milch bedeckt. Deshalb wird von dem Vakuum neben der Milch sehr viel Luft angesaugt, die beim Absaugen weniger Widerstand leistet als die Milch. Dadurch wird das Absaugvakuum reduziert. Außerdem fluktuiert der Druck in dem Zyklon aufgrund des ungleichmäßig pulsierenden Einlaufs des Gemelks in den Zyklon und ist zudem vom momentanen Milchfluss abhängig. Die Stärke des Absaugvakuums, des Differenzvakuums, das auf die Milch wirkt, hat jedoch einen entscheidenden Einfluss auf die entnommene Probenmenge.

Aufgrund dieser Eigenschaften der Vorrichtung gemäß der DD 252 531 A1 ist die gezielte Entnahme einer für das Gemelk repräsentativen Probenmenge nicht möglich, insbesondere bei kleinen Milchflüssen, wie sie am Anfang oder am Ende des Melkvorgangs auftreten, und bei denen nur ein kleiner Teil des Umfangs des Zyklons von der herabströmenden Milch bedeckt ist.

Eine Vorrichtung nach dem Stand der Technik, mit der aus einem Melkfluss eine mengenproportionale Analysenprobe entnommen werden kann, wird in der EP 0 643 292 A2 beschrieben. Die Vorrichtung umfasst einen Milchflussmesser mit einer Mess- und Sammelkammer, in der die gemolkene Milch aufgestaut wird und über einen Messschlitz in einen Sumpf abfließt. Der Milchfluss kann aus der gemessenen Stauhöhe der Milch in der Mess- und Sammelkammer bestimmt werden. Eine Milchprobenentnahmeeinrichtung ist stromabwärts von der Mess- und Sammelkammer angeordnet. Die Milchprobenentnahmeeinrichtung umfasst ein Magnetventil, dessen Öffnungs- und Schließzeiten in Abhängigkeit von verschiedenen Größen, insbesondere in Abhängigkeit vom gemessenen Milchfluss, gesteuert werden.

In der Mess- und Sammelkammer wird die zu untersuchende Milch aufgestaut und dadurch für eine gewisse Zeit zwischengespeichert. Dabei erfolgt eine Vermischung der gerade neu eintretenden Milch mit älterer Milch, die sich bereits in der Mess- und Sammelkammer befindet. Im Laufe eines Melkvorgangs liefert das Tier eine unterschiedliche Milchzusammensetzung. Die größte Variation ist beim Fettgehalt zu beobachten. Deshalb entspricht eine aus der Mess- und Sammelkammer oder stromabwärts von der Mess- und Sammelkammer entnommene Milchprobe nicht der momentan vom Tier abgegebenen Milch. Stattdessen tritt, abhängig von der Menge der zwischengespeicherten Milch, eine interne Verschleppung zwischen der älteren und der neuen Milch auf. Durch diese Verschleppung kann die Entnahme einer für das Gemelk repräsentativen Milchprobe erschwert werden.

Zur Ansteuerung des Magnetventils der EP 0 643 292 A2 ist eine relativ komplizierte und rechenintensive Steuerung erforderlich, weswegen zahlreiche und teure Elektronikbauteile benötigt werden. Das Magnetventil erfordert relativ hohe Stromstärken, was bei der Verwendung von nicht hochstromfesten Akkus wie beispielsweise Lithium-Ionen-Akkus zu Problemen führen kann. Außerdem werden in dieser Vorrichtung Leitungen mit kleinem Durchmesser verwendet, die bei nicht vorschriftsmäßiger Reinigung leicht durch verkäste Milch verstopft werden können.

Die Probenflasche ist in der Vorrichtung der EP 0 643 292 A2 unterhalb von der Messund Sammelkammer angeordnet, was mit der Gefahr von Beschädigungen der Probenflasche und/oder des Flanschs, an dem die Probenflasche angeschlossen ist, verbunden ist.

Eine dem Oberbegriff von Anspruch 1 entsprechende Vorrichtung ist auch aus EP 0 134 836 bekannt.

Eine Aufgabe der vorliegenden Erfindung ist, eine Vorrichtung bereitzustellen, mit der einige oder alle der oben genannten Nachteile des Stands der Technik vermieden werden können.

Insbesondere ist eine Aufgabe der vorliegenden Erfindung, eine Vorrichtung bereitzustellen, mit der eine Durchmischung von Milch, die zu verschiedenen Zeitpunkten gemolken wurde, vor der Probenentnahme vermieden oder zumindest verringert werden kann.

Eine weitere Aufgabe der vorliegenden Erfindung ist, eine Vorrichtung bereitzustellen, die eine zuverlässige Entnahme von Milchproben auch bei kleinen Milchflüssen, die insbesondere am Anfang und am Ende des Melkvorgangs auftreten, ermöglicht.

Erfindungsgemäß wird die Aufgabe durch eine Vorrichtung zum Durchführen mindestens einer Messung und zur Entnahme von Milchproben aus einer Melkmaschine gelöst. Die Vorrichtung ist von Milch durchströmbar und umfasst eine Luftabscheideeinrichtung, eine Messeinrichtung, eine Probenentnahmeeinrichtung und eine nach oben offene Rinne. Die Luftabscheideeinrichtung ist dafür ausgelegt, die Milch von Luft, mit der die Milch vermischt ist, zu trennen. Die Messeinrichtung ist stromabwärts von der Luftabscheideeinrichtung angeordnet. Sie ist durch eine erste Milchauslassöffnung der Luftabscheideeinrichtung mit der Luftabscheideeinrichtung verbunden und dafür ausgelegt, eine oder mehrere Messungen mit der die Vorrichtung durchströmenden Milch durchzuführen. Die Probenentnahmeeinrichtung ist dafür ausgelegt, Milch einem Probenbehälter zuzuführen. Die nach oben offene Rinne ist stromaufwärts von der Messeinrichtung angeordnet und dafür ausgelegt, zumindest einen Teil der Milch, die in der Luftabscheideeinrichtung von der mit ihr vermischten Luft getrennt wurde, aufzunehmen und derart zu leiten, dass sie zumindest teilweise zur Probenentnahmeeinrichtung fließt.

In der Vorrichtung gemäß der Erfindung werden Milchproben stromaufwärts von der Messeinrichtung entnommen. Dadurch werden die Milchproben direkt aus der von der Melkmaschine zufließenden Milch entnommen, ohne dass sich die Milch staut oder die Strömung der Milch wesentlich verlangsamt wird, was in Messeinrichtungen, insbesondere Messeinrichtungen zur Messung eines Milchflusses, vorkommen kann. So können eine Durchmischung von Milch, die zu verschiedenen Zeitpunkten gemolken wurde, und Verfälschungen durch ein Aufrahmen der Milch vermieden oder zumindest verringert werden.

Durch die nach oben offene Rinne wird Milch aufgefangen und gezielt zu der Probenentnahmeeinrichtung geleitet. Dadurch erhält die Probenentnahmeeinrichtung selbst dann noch Milch, wenn der Milchfluss sehr gering ist.

In manchen Ausführungsformen umfasst die Luftabscheideeinrichtung eine zweite Milchauslassöffnung. Die Probenentnahmeeinrichtung ist so angeordnet, dass Milch, die aus der zweiten Milchauslassöffnung austritt, zur Probenentnahmeeinrichtung fließt. Die nach oben offene Rinne ist an einem stromabwärts gelegenen Ende der Luftabscheideeinrichtung und stromaufwärts von der ersten Milchauslassöffnung angeordnet und dafür ausgelegt, Milch zu der zweiten Milchauslassöffnung der Luftabscheideeinrichtung zu leiten.

Dadurch kann ein Teil der Milch von der nach oben offenen Rinne bereits in der Luftabscheideeinrichtung abgefangen werden, bevor die Milch die erste Milchauslassöffnung erreicht, wodurch besonders zuverlässig Milch zur Probenentnahmeeinrichtung geleitet werden kann.

In manchen Ausführungsformen nimmt eine Tiefe und/oder eine Breite der Rinne von einem von der zweiten Milchauslassöffnung abgewandtem Ende der Rinne zur zweiten Milchauslassöffnung hin zu. Durch die zunehmende Tiefe strömt die Milch entlang der Rinne bergab zur zweiten Milchauslassöffnung, wodurch der Milchfluss zur Probenentnahmeeinrichtung weiter verbessert wird. Durch die zunehmende Breite kann der Milchfluss zur Probenentnahmeeinrichtung ebenfalls verbessert werden.

In manchen Ausführungsformen umfasst die Luftabscheideeinrichtung einen Becher mit einer Milcheinlassöffnung, durch die Milch in einer zur Innenwand des Bechers tangentialen Richtung in den Becher eintritt. Die nach oben offene Rinne sowie die erste und die zweite Milchauslassöffnung befinden sich im Boden des Bechers. Die Rinne verläuft entlang einem Umfang der ersten Milchauslassöffnung.

Durch die Zentrifugalkraft, die auf das tangential entlang der Innenwand des Bechers strömende Milch-Luft-Gemisch wirkt, werden die Milch und die Luft voneinander getrennt. Die Milch strömt zum Boden des Bechers, wo sich die Rinne und die beiden Milchauslassöffnungen befinden, so dass diese Milch mit einem nur geringen Luftanteil erhalten. Dadurch kann der Messeinrichtung und der Probenentnahmeeinrichtung Milch mit einem nur geringen Luftanteil zugeführt werden. Da die Rinne entlang einem Umfang der ersten Milchauslassöffnung verläuft, kann sie Milch abfangen, die zur ersten Milchauslassöffnung fließt, bevor sie die erste Milchauslassöffnung erreicht und der zweiten Milchauslassöffnung zuführen, wodurch die Versorgung der Probenentnahmeeinrichtung mit Milch insbesondere bei kleinen Milchflüssen verbessert werden kann.

In manchen Ausführungsformen kann die erste Milchauslassöffnung im Zentrum des Bodens des Bechers angeordnet sein.

In manchen Ausführungsformen umfasst die Vorrichtung ein Sieb, das stromabwärts von der ersten und der zweiten Milchauslassöffnung angeordnet ist und in einer Richtung von der zweiten Milchauslassöffnung zur Probenentnahmeeinrichtung schräg abfällt, so dass Milch, die durch die zweite Milchauslassöffnung aus der Luftabscheideeinrichtung austritt, an der Unterseite des Siebs entlang zur Probenentnahmeeinrichtung fließt. Die Milch wird dabei durch Kohäsionskräfte an der Unterseite des Siebs gehalten. Da so zur Leitung der Milch von der zweiten Milchauslassöffnung zur Probenentnahmeeinrichtung keine geschlossenen Röhren benötigt werden, können Probleme wie eine Verstopfung durch Fremdkörper oder eine Verkäsung von röhrenförmigen Leitungen vermieden werden. Größere Fremdkörper und feste oder zähflüssige Milchbestandteile können vom Sieb aufgehalten werden. Dadurch können Störungen der Probentnahme durch Fremdkörper und/oder Milchbestandteile verringert werden, die in Vorrichtungen nach dem Stand der Technik, in denen Röhren mit engem Querschnitt verwendet werden, auftreten können.

In manchen Ausführungsformen hat das Sieb eine konische Form. Eine Kegelachse des Siebs verläuft durch die erste Milchauslassöffnung und die Probenentnahmeeinrichtung ist an einem Rand des Siebs angeordnet. Durch die konische Form kann erreicht werden, dass das Sieb schräg abfällt. Da die Kegelachse durch die erste Milchauslassöffnung verläuft, kann neben der Milchströmung von der zweiten Milchauslassöffnung zur Probenentnahmeeinrichtung auch eine Milchströmung von der ersten Milchauslassöff nung zur Probenentnahmeeinrichtung erreicht werden, insbesondere bei größeren Milchflüssen.

In manchen Ausführungsformen kann die Rinne stromabwärts von der ersten Milchauslassöffnung angeordnet sein.

In manchen Ausführungsformen umfasst die Messeinrichtung einen Behälter zur Zwischenspeicherung von Milch während der Messung. In einigen dieser Ausführungsformen umfasst die Messeinrichtung ferner eine Füllstandsmessvorrichtung, die dafür ausgebildet ist, einen Füllstand von Milch in dem Behälter zu messen und eine Auswerteeinheit, die dafür ausgebildet ist, aus der Größe der Abflussöffnung und dem von der Füllstandsmessvorrichtung gemessenen Füllstand einen Milchfluss in den Behälter zu berechnen. Dadurch kann eine präzise Bestimmung des Milchflusses in die Vorrichtung und, durch zeitliche Integration des Milchflusses, der bisher gemolkenen Milchmenge durchgeführt werden.

In manchen Ausführungsformen befindet sich zumindest ein Teil der Probenentnahmeeinrichtung in einem der Luftabscheideeinrichtung zugewandten Teil des Behälters. Im Inneren des Behälters ist die Probenentnahmeeinrichtung von mechanischen Beschädigungen geschützt und kann bei einer Reinigung des Behälters mit gesäubert werden.

In manchen Ausführungsformen ist der Probenbehälter neben dem Behälter angeordnet. Im Vergleich zu einer Anordnung unterhalb des Behälters, wie sie in den meisten Systemen nach dem Stand der Technik verwendet wird, wird der Probenbehälter so im rauen Praxisbetrieb weniger leicht abgeschlagen und/oder aus seiner Halterung gedrückt. Dadurch können unter anderem Undichtigkeiten der Befestigung des Probenbehälters, die zu störenden Druckunterschieden zwischen dem Innenraum des Behälters und dem Probenbehälter führen könnten, vermieden werden. Derartige Druckunterschiede beeinflussen sowohl die Probenmenge als auch die Repräsentativität und könnten das Zuführen der Proben in den Probenbehälter erschweren oder völlig verhindern. Außerdem kann durch die Anordnung des Probenbehälters neben dem Behälter eine kompaktere Form und somit eine verbesserte Handhabung der Vorrichtung erreicht werden.

In manchen Ausführungsformen umfasst die Probenentnahmeeinrichtung einen Schieber mit einem Volumen zur Aufnahme einer vorgegebenen Milchmenge sowie einer Einlassöffnung und einer Auslassöffnung. Der Schieber ist zwischen einer ersten und einer zweiten Stellung beweglich. Die Vorrichtung umfasst ferner einen Antrieb zum Bewegen des Schiebers zwischen der ersten und der zweiten Stellung. Eine Struktur verschließt die Auslassöffnung und gibt die Einlassöffnung frei, wenn sich der Schieber in der ersten Stellung befindet. Wenn sich der Schieber in der zweiten Stellung befindet, verschließt die Struktur die Einlassöffnung und gibt die Auslassöffnung frei, so dass Milch aus dem Volumen in den Probenbehälter fließt. Somit kann durch Hin- und Herbewegen des Schiebers zwischen der ersten und der zweiten Stellung mittels des Antriebs jeweils eine Menge an Milch, die dem Volumen des Schiebers entspricht, in den Probenbehälter gebracht werden, und zwar weitgehend unabhängig vom momentan herrschenden Druck und dem momentane Milchfluss. Die Einlass- und die Auslassöffnung überschneiden sich zu keinem Zeitpunkt. Dadurch kann zuverlässig eine gewünschte Menge von Milch als Probe entnommen werden.

In manchen Ausführungsformen ist der Schieber durch eine Drehbewegung zwischen der ersten und der zweiten Stellung beweglich.

In manchen Ausführungsformen ist die Messeinrichtung zur Messung eines Milchflusses ausgebildet und die Probenentnahmevorrichtung umfasst eine Steuerung, die dafür ausgelegt ist, den Schieber jeweils dann zu betätigen, wenn sich die geflossene Milchmenge um einen vorgegebenen Mengenzuwachs erhöht hat. Dadurch kann eine in guter Näherung dem Milchfluss proportionale Milchmenge in den Probenbehälter abgefüllt werden, so dass die Probe für die durch die Vorrichtung geflossene Milch repräsentativ ist.

In manchen Ausführungsformen umfasst der Antrieb zum Bewegen des Schiebers zwischen der ersten und der zweiten Stellung einen Elektromotor. Im Vergleich zu Magnetventilen, die im Stand der Technik verwendet werden, kann ein Elektromotor mit geringerer Stromstärke betrieben werden, was die Verwendung von nicht hochstromfesten Akkus mit hoher Kapazität wie beispielsweise Lithium-Ionen-Akkus ermöglicht.

In manchen Ausführungsformen umfasst die Struktur eine Überlaufwanne mit einer Auslassöffnung, die so angeordnet ist, dass in der ersten Stellung des Schiebers Milch aus der Auslassöffnung der Überlaufwanne in das Volumen des Schiebers fließt. Die Überlaufwanne kann eine Menge von Milch speichern, die dann mit einer vom momentanen Milchfluss weitgehend unabhängigen Geschwindigkeit in das Volumen des Schiebers fließen kann. Dadurch kann sichergestellt werden, dass der Schieber vollständig gefüllt wird.

In manchen Ausführungsformen umfasst die Vorrichtung Mittel zum Druckausgleich zwischen dem Probenbehälter und der Umgebung der Probenentnahmeeinrichtung. Dadurch können Druckunterschiede zwischen dem Probenbehälter und der Probenentnahmeeinrichtung, die den Fluss der Milch von der Probenentnahmeeinrichtung in den Probenbehälter stören können, vermieden werden.

In manchen Ausführungsformen umfasst die Vorrichtung ferner eine zweite Probenentnahmeeinrichtung, die dafür ausgelegt ist, Milch einem zweiten Probenbehälter zuzuführen und so angeordnet ist, dass Milch aus der Luftabscheideeinrichtung zur zweiten Probenentnahmeeinrichtung fließt. In einigen dieser Ausführungsformen kann die Vorrichtung ferner eine Steuerung umfassen, die dafür ausgelegt ist, die erste und die zweite Probenentnahmeeinrichtung während verschiedener Zeitabschnitte eines Melkvorgangs zu betätigen. Dadurch können Milchproben entnommen werden, die für die Zusammensetzung der Milch während unterschiedlicher Phasen des Melkvorgangs repräsentativ sind.

Ausführungsformen der Erfindung werden im Folgenden mit Bezug auf die Figuren beschrieben. Es zeigen:

Fig. 1 eine schematische Seitenansicht einer Vorrichtung gemäß einer Ausführungsform der vorliegenden Erfindung;

Fig. 2 eine schematische Schnittzeichnung der in Fig. 1 gezeigten Vorrichtung;

Fig. 3 eine weitere schematische Schnittzeichnung der in Fig. 1 gezeigten Vorrichtung;

Fig. 4a und 4b schematische Schnittzeichnungen einer Probenentnahmeeinrichtung der in den Fig. 1 bis 3 gezeigten Vorrichtung;

Fig. 5 eine schematische perspektivische Darstellung eines Antriebs der Probenentnahmeeinrichtung; und

Fig. 6 bis 8 schematische Schnittzeichnungen von Vorrichtungen gemäß weiterer Ausführungsformen der Erfindung.

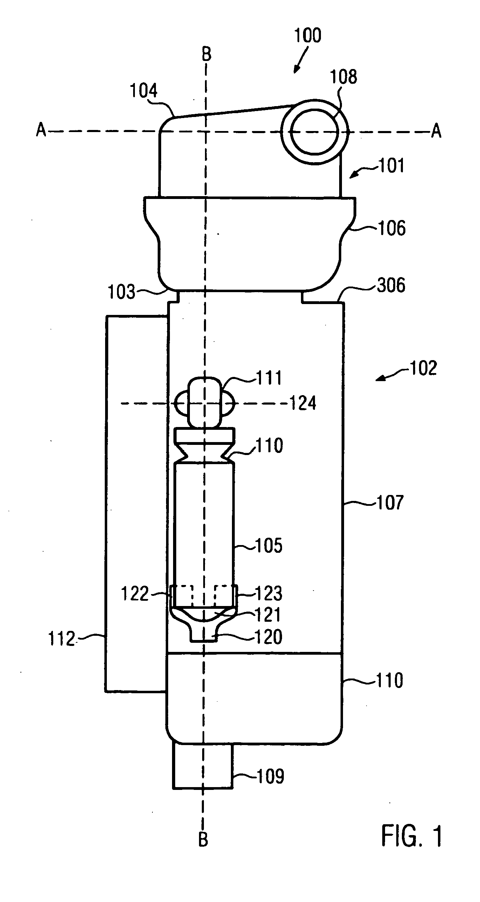

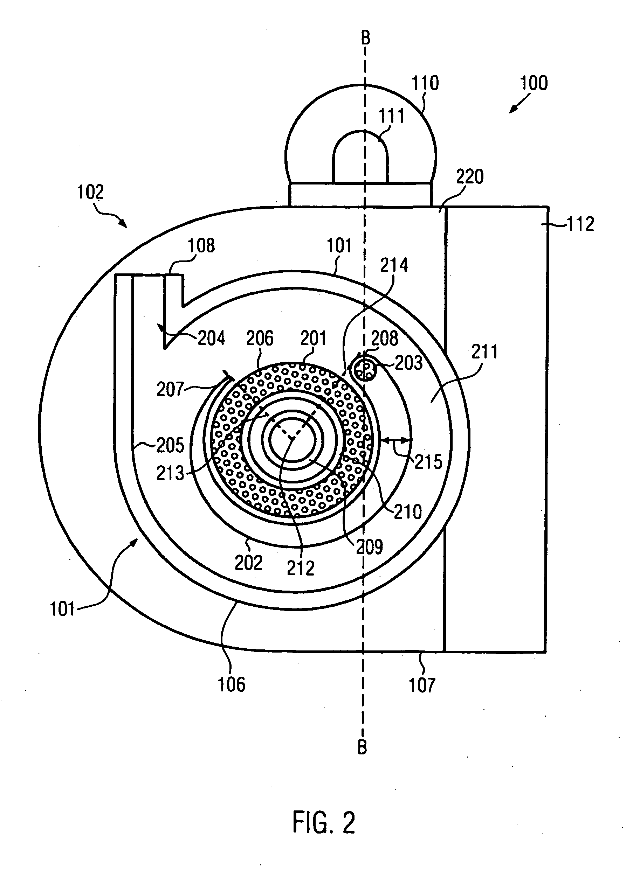

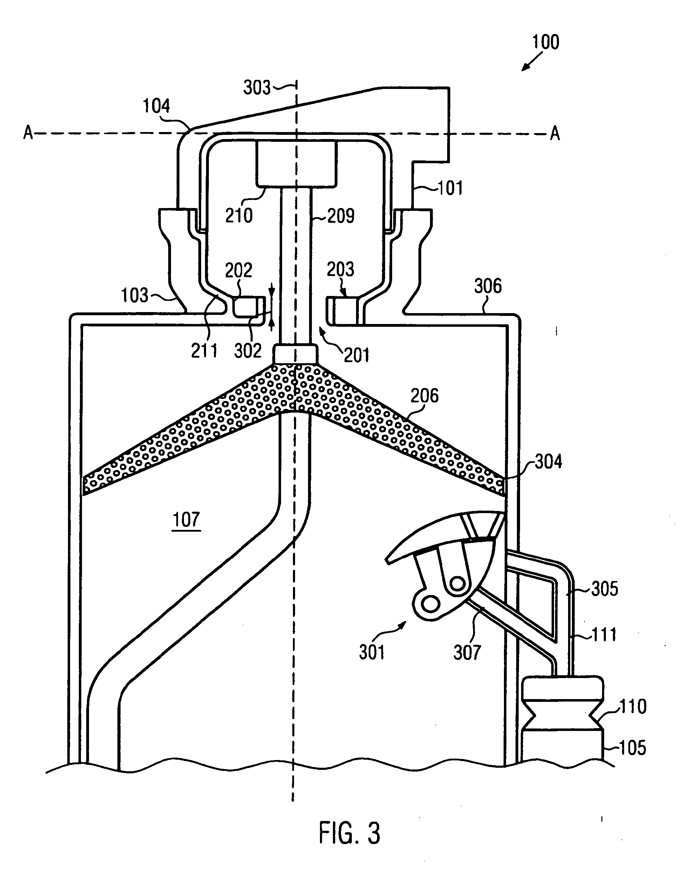

Fig. 1 zeigt eine schematische Seitenansicht einer Vorrichtung 100 zum Durchführen einer Messung und zur Entnahme von Milchproben aus einer Melkmaschine gemäß einer Ausführungsform der vorliegenden Erfindung. Eine Schnittansicht der Vorrichtung 100 entlang einer Ebene A-A ist in der Fig. 2 gezeigt. Die Fig. 3 zeigt eine Schnittansicht eines oberen Teils der Vorrichtung 100 entlang einer Ebene B-B.

Die Vorrichtung 100 weist einen ersten Anschluss 108 und einen zweiten Anschluss 109 auf. Beim Betrieb der Vorrichtung 100 kann der erste Anschluss 108 mit dem Melkzeug einer Melkmaschine verbunden werden und der zweite Anschluss 109 kann mit einer zu einem Milchtank führenden Melkleitung der Melkmaschine verbunden werden. Während eines Melkvorgangs, der mit der Melkmaschine durchgeführt wird, strömt dann Milch, die von einem Tier (z.B. einer Kuh, einer Ziege oder einem Schaf) gemolken wird, durch den ersten Anschluss 108 in die Vorrichtung 100. Die Milch, die vom Melkzeug kommt, ist üblicherweise mit Transportluft vermischt, so dass zusätzlich zu der Milch auch Luft durch den Anschluss 108 in die Vorrichtung 100 strömt. Durch den zweiten Anschluss 109 können die Milch und die Transportluft die Vorrichtung 109 wieder verlassen, so dass die Vorrichtung 100 von Milch (und Luft) durchströmt wird.

Die Richtung, in der die Milch beim Betrieb durch die Vorrichtung 100 strömt, definiert eine Strömungsrichtung. Im Folgenden wird ein erster Teil der Vorrichtung 100 als "stromaufwärts" von einem zweiten Teil der Vorrichtung 100 gelegen bezeichnet, wenn Milch, die entlang der Strömungsrichtung durch die Vorrichtung 100 fließt, auf den ersten Teil trifft, bevor sie auf den zweiten Teil trifft. Trifft die Milch beim Strömen entlang der Strömungsrichtung dagegen auf den zweiten Teil, bevor sie auf den ersten Teil trifft, so wird der erste Teil als "stromabwärts" von dem zweiten Teil gelegen bezeichnet.

Die Vorrichtung 100 hat eine vertikale Richtung, die parallel zu der Ebene B-B und senkrecht zu der Ebene A-A verläuft. Beim Betrieb kann die Vorrichtung 100 derart angeordnet werden, dass die vertikale Richtung lotrecht verläuft, wobei die Vorrichtung 100 so ausgerichtet wird wie in der Fig. 1 dargestellt, d.h., ein erster Teil der Vorrichtung 100, der in Fig. 1 oberhalb eines zweiten Teils dargestellt ist, befindet sich beim Betrieb der Vorrichtung 100 über dem zweiten Teil. Im Folgenden werden die Begriffe "vertikale", "horizontal", "oben" und "unten" entsprechend dieser Orientierung der Vorrichtung 100 verwendet.

Grundsätzlich wird die Vorrichtung 100 beim Betrieb somit von oben nach unten von Milch durchströmt. In Teilen der Vorrichtung kann die Strömungsrichtung jedoch von der vertikalen Richtung abweichen. Insbesondere kann die Strömungsrichtung in manchen Teilen der Vorrichtung horizontal verlaufen oder sowohl eine horizontale als auch eine vertikale Komponente aufweisen.

Die Vorrichtung 100 umfasst eine Luftabscheideeinrichtung 101. Die Luftabscheideeinrichtung 101 umfasst einen Becher 106, der eine im Wesentlichen rotationssymmetrische Form mit einer vertikalen Symmetrieachse aufweisen kann. Der erste Anschluss 108 endet in einer Milcheinlassöffnung 204 des Bechers 106, die ins Innere des Bechers 106 führt. Die Milcheinlassöffnung 204 befindet sich an einem stromaufwärts gelegenen Ende 104 der Luftabscheideeinrichtung 101, das sich oberhalb von einem stromabwärts gelegenen Ende 103 der Luftabscheideeinrichtung 101 befindet.

Die Milcheinlassöffnung 204 ist so angeordnet, dass sich das Milch-Luft-Gemisch, das durch den ersten Anschluss 108 in die Vorrichtung 100 strömt, zunächst in einer im Wesentlichen horizontalen Richtung tangential zu einer Innenwand 205 des Bechers 106 bewegt. Dadurch erhält man eine Rotationsbewegung des Milch-Luft-Gemischs entlang der Innenwand des Bechers 106.

Durch die Rotationsbewegung entsteht eine Zentrifugalkraft, die die Milch zur Innenwand 205 des Bechers 106 drückt, während sich die leichtere Luft zum Zentrum des Bechers 106 bewegt, wo sie durch eine Bypassleitung 209 aus der Luftabscheideeinrichtung 101 strömen kann. Um das nach oben offene obere Ende der Bypassleitung 209 herum kann eine nach unten offene ringförmige Struktur 210 angeordnet sein, die Milchtröpfchen daran hindert, in die Bypassleitung 209 einzutreten. In der Fig. 3 ist das obere Ende der Bypassleitung 209 von der ringförmigen Struktur 210 verdeckt.

Wenn sich die Rotationsgeschwindigkeit der Milch durch Reibung mit der Innenwand 205 des Bechers 106 genügend verlangsamt hat, kann die Milch entlang der Innenwand 205 nach unten zum stromabwärts gelegenen Ende 103 des Bechers 106 strömen.

Der Becher 106 weist an seinem stromabwärts gelegenen Ende 103 einen Boden 211 auf. Der Boden 211 weist eine nach oben offene Rinne 202, eine erste Milchauslassöffnung 201 und eine zweite Milchauslassöffnung 203 auf.

Die erste Milchauslassöffnung 201 kann im Wesentlichen kreisförmig sein und sich im Zentrum des Bechers 106 befinden, so dass ihr Mittelpunkt 212 auf der Symmetrieachse des Bechers 106 liegt. Die nach oben offene Rinne 202 kann eine gekrümmte Form haben und entlang einem Umfang der ersten Milchauslassöffnung 210 verlaufen. Die zweite Milchauslassöffnung 203 kann sich an einem ersten Ende 208 der nach oben offenen Rinne 202 befinden, wobei eine Tiefe 302 der Rinne 202 in einer Richtung von einem von der zweiten Milchauslassöffnung 203 abgewandten zweiten Ende 207 der Rinne 202 zum ersten Ende 208 hin zunimmt. Eine Breite 215 der Rinne 202 kann ebenfalls vom zweiten Ende 207 zum ersten Ende 208 hin zunehmen, um den Zustrom von Milch über den äußeren Rand der Rinne, der zu der bereits längs der Rinne vom zweiten Ende 207 zum ersten Ende 208 fließenden Milch hinzukommt, zu berücksichtigen.

Die Richtung vom zweiten Ende 207 zum ersten Ende 208 der Rinne 202 kann in einem gleichen Drehsinn um die erste Milchauslassöffnung 201 herum verlaufen wie die Richtung, in der das Milch-Luft-Gemisch durch die Öffnung 204 in die Luftabscheideeinrichtung 101 eintritt. Dadurch kann verhindert werden, dass die Bewegung der Milch in der Rinne 202 zur zweiten Milchauslassöffnung 203 durch eine am Boden 211 des Bechers 106 noch vorhandene Drehbewegung der Milch gebremst wird. Stattdessen wird bei einer derartigen Anordnung der Rinne 202 die Bewegung der Milch in der Rinne 202 durch die Drehbewegung der Milch begünstigt. So kann die Strömung der Milch zu zweiten Milchauslassöffnung 203 gefördert werden.

Milch, die entlang der Innenwand 205 des Bechers 106 nach unten strömt, bewegt sich entlang des Bodens 211 des Bechers 106 zu dessen Zentrum. Dabei kann die Milch auf die Rinne 202 treffen, bevor sie auf die erste Milchauslassöffnung 201 trifft und entlang der Rinne 202 zu der zweiten Milchauslassöffnung 203 fließen.

In Ausführungsformen, in denen die Tiefe 302 der Rinne 202 vom zweiten Ende 207 zum ersten Ende 208, an dem sich die zweite Milchauslassöffnung 203 befindet, zunimmt, ist ein Gefälle vorhanden, das die Strömung der Milch zur zweiten Milchauslassöffnung 203 begünstigt, wodurch der Milchfluss durch die zweite Milchauslassöffnung 203 verbessert wird. In anderen Ausführungsformen kann die Tiefe 302 der Rinne 202 jedoch auch konstant sein.

Während des Melkvorgangs variiert der Milchfluss stark. Während am Anfang und am Ende des Melkvorgangs kleine Milchflüsse (bei Kühen Größenordnung ca. 0.05 kg/min) vorkommen, können in der Mitte des Melkvorgangs große Milchflüsse (bei Kühen bis zu ca. 12 kg/min) auftreten.

Bei den kleinen Milchflüssen kann ein großer Teil der Milch, die durch den ersten Anschluss 108 in die Luftabscheideeinrichtung 101 strömt, von der Rinne 202 aufgefangen und zur zweiten Milchauslassöffnung 203 geleitet werden, so dass ein großer Teil der Milch die Luftabscheideeinrichtung 101 durch die zweite Milchauslassöffnung 203 verlässt.

Bei großen Milchflüssen kann dagegen Milch über die Rinne 202 hinwegströmen und die Luftabscheideeinrichtung 101 durch die erste Milchauslassöffnung 201 verlassen. Zusätzlich zu dem Milchfluss durch die erste Milchauslassöffnung 201 erhält man jedoch auch bei großen Milchflüssen einen Milchfluss durch die zweite Milchauslassöffnung 203, da ein Teil der Milch durch die Rinne 202 zur zweiten Milchauslassöffnung 203 geleitet wird oder direkt auf die zweite Milchauslassöffnung 203 trifft.

Ein Winkel zwischen einer Geraden 213, die durch den Mittelpunkt 212 der ersten Milchauslassöffnung 201 und das erste Ende 208 der Rinne 202 verläuft und einer Geraden 214, die durch den Mittelpunkt 212 der ersten Milchauslassöffnung 201 und das zweite Ende 207 der Rinne 202 verläuft, kann größer als 180° sein, beispielsweise einen Wert in einem Bereich von 270° bis 340° haben, so dass sich die Rinne über einen größeren Teil des Umfangs der ersten Milchauslassöffnung 201 erstreckt. Dadurch kann erreicht werden, dass bei kleinen Milchflüssen ein Großteil der Milch, die durch die Luftabscheideeinrichtung 101 strömt, von der Rinne 202 aufgefangen wird.

Eine Querschnittsfläche der ersten Milchauslassöffnung 201 kann so ausgelegt sein, dass auch bei dem maximal zu erwartenden Milchfluss die gesamte Milch durch die erste Milchauslassöffnung strömen könnte, ohne dass ein Rückstau in der Luftabscheideeinrichtung 101 auftritt. In manchen Ausführungsformen kann die erste Milchauslassöffnung 201 eine Querschnittsfläche von 5 bis 11 cm$^2$ haben.

Eine Querschnittsfläche der zweiten Milchauslassöffnung 203 kann so ausgelegt sein, dass eine zum Entnehmen einer gewünschten Probenmenge ausreichende Milchmenge durch die zweite Milchauslassöffnung 203 strömt. In manchen Ausführungsformen kann die zweite Milchauslassöffnung 203 eine Querschnittsfläche von 0.3 cm$^2$ haben.

Die Vorrichtung 100 umfasst ferner eine Messeinrichtung 102. Die Messeinrichtung 102 ist durch die erste Milchauslassöffnung 201 der Luftabscheideeinrichtung 101 mit der Luftabscheideeinrichtung 101 verbunden. Milch strömt durch die erste Milchauslassöffnung 201 zur Messeinrichtung 102, wobei die Milch die Messeinrichtung 102 erst erreicht, nachdem sie die Luftabscheideeinrichtung 101 passiert hat. Die Messeinrichtung 102 ist somit stromabwärts von der Luftabscheideeinrichtung 101 angeordnet. In manchen Ausführungsformen kann die Messeinrichtung 102 unter der Luftabscheideeinrichtung 101 angeordnet sein.

Die Messeinrichtung 102 kann einen Behälter 107 umfassen, der zur Zwischenspeicherung der Milch während der Messung dient. Die erste Milchauslassöffnung 201 und die zweite Milchauslassöffnung können durch einen Deckel 306 des Behälters 107 hindurch verlaufen.

Die Luftabscheideeinrichtung 101 kann vom Behälter 107 leicht trennbar ausgebildet sein. Beispielsweise können die Luftabscheideeinrichtung 101 und der Behälter 107 miteinander verschraubt oder durch einen Bajonettverschluss miteinander verbunden sein. Dadurch kann die Luftabscheideeinrichtung 101 zum Reinigen der Vorrichtung 100 vom Behälter 107 abgenommen werden.

In manchen Ausführungsformen umfasst der Behälter 107 eine Abflussöffnung, die sich in einem Boden des Behälters befinden kann, sowie eine Füllstandsmessvorrichtung zum Messen eines Füllstands von Milch in dem Behälter 107. Je größer der Füllstand der Milch in dem Behälter 107 ist, desto größer ist der Druck, den die Milch auf die Abflussöffnung ausübt, so dass bei einem höheren Füllstand mehr Milch aus dem Behälter 107 austritt.

Abhängig vom Milchfluss in den Behälter 107 kann sich deshalb ein Füllstand einstellen, bei dem der Milchfluss durch die Abflussöffnung gleich groß wie der Milchfluss in den Behälter ist, so dass der Füllstand der Milch in dem Behälter ein Maß für den Milchfluss, der durch die Vorrichtung 100 strömt, ist. Die Messeinrichtung 102 kann eine Auswerteeinheit umfassen, die dafür ausgelegt ist, aus der bekannten Größe der Abflussöffnung und dem von der Füllstandsmessvorrichtung gemessenen Füllstand den Milchfluss in den Behälter 107 zu berechnen. In manchen Ausführungsformen kann die Größe der Abflussöffnung veränderlich sein, um einen größeren Messbereich zu erhalten.

Nachdem die Milch durch die Abflussöffnung aus dem Behälters 107 geströmt ist, kann sie wieder mit der durch die Bypassleitung 109 strömenden Transportluft vereinigt werden, bevor sie die Vorrichtung 100 durch den zweiten Anschluss 109 verlässt. Die Mittel zum Zusammenführen von Milch und Transportluft und/oder Mittel zum Verändern der Größe der Abflussöffnung können sich in einem unteren Teil 110 der Vorrichtung 100 befinden.

In einigen Ausführungsformen kann die Messeinrichtung 102 Merkmale aufweisen, die denen der in der DE 10 2008 057 819 A1 beschriebenen Vorrichtung entsprechen.

In weiteren Ausführungsformen kann die Messeinrichtung 102 auch eine Vorrichtung zum Messen eines Milchflusses eines anderen Typs aufweisen.

Zusätzlich und/oder alternativ zu einer Vorrichtung zum Messen eines Milchflusses kann die Messeinrichtung 102 weitere Messgeräte umfassen, beispielsweise Messgeräte zum Messen einer Temperatur oder eines Eiweiß-, Fett-, und/oder Laktosegehalts, und/oder Geräte zum Bestimmen einer Konzentration von Zellen und/oder bestimmten Zellklassen in der Milch. Derartige Messgeräte können dafür ausgelegt sein, eine Online-Messung mit Hilfe der Nah-Infrarot-Technik oder mit Hilfe sogenannter Biologischer Sensoren durchzuführen.

Die weiteren Messgeräte können neben dem Behälter 107 angebracht werden und, in manchen Ausführungsformen, durch die Schwerkraft der in der Vorrichtung 100 nach unten strömenden Milch befüllt und wieder entleert werden, beispielsweise mittels seitlich aus dem Behälter 107 herausgeführter Leitungen. Eine Anbringung der weiteren Messgeräte neben dem Behälter 107 hat im Vergleich zu einer Anbringung unterhalb des Behälters 107 den Vorteil einer kompakteren Bauform.

Die Vorrichtung 100 umfasst ferner eine Probenentnahmeeinrichtung 301, die sich in manchen Ausführungsformen in einem oberen, der Luftabscheideeinrichtung 101 zugewandten Teil des Behälters 107 befindet und dafür ausgelegt ist, Milch einem Probenbehälter 105 zuzuführen. Der Probenbehälter 105 kann eine Probenflasche, beispielsweise eine handelsübliche Analysenflasche mit einem Volumen im Bereich von 20 bis 100 ml, etwa einem Volumen von 50 ml, sein. Eine Probenentnahmeeinrichtung 301, die in einer Ausführungsform der vorliegenden Erfindung verwendet werden kann, wird weiter unten genauer beschrieben.

Der Probenbehälter 105 kann durch einen Flansch 110 abnehmbar und luftdicht mit einer Probenbehälterhalterung 111 verbindbar sein.

In manchen Ausführungsformen kann der Flansch 110 ganz oder teilweise aus einem elastischen Material, beispielsweise Gummi, gebildet und so ausgelegt sein, dass er einerseits den Probenbehälter abdichtet, andererseits aber auch um eine in Fig. 1 horizontale Achse 124 neigbar ist und eine Kraft in axialer Richtung des Probenbehälters 105 (in Fig. 1 vertikal) auf den Probenbehälter 105 ausüben kann.

Zusätzlich zu der Probenbehälterhalterung 111 kann eine untere Probenbehälterstütze 120 vorgesehen sein. Diese weist einen Boden 121 auf, auf dem der Boden des Probenbehälters 105 aufliegt, und der leicht schräg sein kann, so dass sich der vom Behälter 107 abgewandte Teil des Bodens 121 in einem größeren Abstand zur Probenbehälterhalterung 111 befindet als der dem Behälter 107 zugewandte Teil des Bodens 121.

Die untere Probenbehälterstütze 120 kann ferner seitliche Führungen 122, 123 aufweisen, die dafür ausgelegt sind, ein Abrutschen des Probenbehälters 105 in seitlicher Richtung zu verhindern.

Zum Einsetzen des Probenbehälters 105 kann der Probenbehälter 105 an den Flansch 110 angesetzt und durch einen leichten Druck auf den unteren Teil des Probenbehälters in Richtung zum Behälter 107 in seine Abfüllposition gebracht werden. Dann ist der Probenbehälter 105 zwischen dem elastischen Flansch 110 und der unteren Probenbehälterstütze 120 unter axialem Druck eingespannt. Die Ausgestaltung des Bodens 121 der unteren Probenbehälterstütze 120 und der Winkel zwischen diesem und dem Flansch 110 können so gewählt werden, dass der Probenbehälter 105 rastend in seiner Abfüllposition sitzt. Durch die seitlichen Führungen 122, 123 ist der Probenbehälter 105 auch in seitlicher Richtung gesichert, so dass der Probenbehälter um 360° gegen Abknicken und/oder Abschlagen gesichert ist.

Das Abnehmen des Probenbehälters 105 kann durch ein leichtes Wegziehen des unteren Teils des Probenbehälters 105 in einer vom Behälter 107 weg gerichteten Richtung erfolgen. Durch die beim Abnehmen des Probenbehälters 105 erfolgte axiale Entspannung des Flanschs 110 kann auch eine radiale Entspannung der radialen Dichtung erreicht werden. Dadurch kann der Probenbehälter 105 leicht und ohne Ruck nach unten, somit ohne die Gefahr eines Verschüttens des Inhalts des Probenbehälters 105, abgenommen werden kann.

Eine Druckausgleichsleitung 305 kann das Innere des Probenbehälters 105 mit dem Inneren des Behälters 107 verbinden, so dass im Wesentlichen kein Druckunterschied zwischen dem Inneren des Probenbehälters 105 und dem Inneren des Behälters 107, in dem beim Betrieb der Vorrichtung 100 ein Unterdruck entsprechend dem von der Melkmaschine bereitgestellten Melkvakuum herrscht, vorhanden ist.

Außerdem ist eine Probenleitung 307 vorgesehen, die das Innere des Probenbehälters 105 mit der Probenentnahmevorrichtung 301 verbindet. Durch die Probenleitung 307 kann Milch von der Probenentnahmeeinrichtung 301 in den Probenbehälter 105 fließen. Das der Probenentnahmeeinrichtung 301 zugewandte Ende der Probenleitung 307 kann oberhalb von dem dem Probenbehälter 105 zugewandten Ende der Probenleitung 307 liegen, so dass die Milch von der Probenentnahmeeinrichtung 301 bergab in den Probenbehälter 105 fließt.

Da wegen der Druckausgleichsleitung 305 im Inneren des Probenbehälters 105 und in der Umgebung der Probenentnahmeeinrichtung 301 bzw. in der Probenentnahmeeinrichtung 301 selbst im Wesentlichen der gleiche Druck herrscht, ist der Fluss der Proben in den Probenbehälter 105 von der Größe des Drucks im Probenbehälter 105 und im Behälter 107 im Wesentlichen unabhängig. Dadurch können negative Auswirkungen von Druckschwankungen auf die Probenentnahme vermieden oder zumindest verringert werden.

Die Vorrichtung 100 kann ferner ein Sieb 206 umfassen. Das Sieb 206 ist stromabwärts von der ersten Milchauslassöffnung 201 und der zweiten Milchauslassöffnung 203 angeordnet. Das Sieb 206 kann sich im oberen Teil, insbesondere in der oberen Hälfte, im oberen Viertel und/oder im oberen Achtel des Behälters 107 befinden und sich über einen gesamten Querschnitt des Behälters 107 erstrecken, so dass Milch, die in den unteren Teil des Behälters 107 eintritt, zuvor das Sieb 206 passiert.

Die Probenentnahmeeinrichtung 301 und Teile der Messeinrichtung wie beispielsweise eine Füllstandsmesseinrichtung und eine (optional in der Größe verstellbare) Abflussöffnung sowie Messgeräte, die dafür ausgebildet sind, neben dem Milchfluss weitere Eigenschaften der Milch zu messen, können sich stromabwärts von dem Sieb 206, insbesondere unterhalb des Siebs 206 befinden.

Durch das Sieb 206 können Festköper wie beispielsweise Stroh, Häcksel oder Insekten bzw. Teile von Insekten, die während des Melkvorgangs von der Melkmaschine angesaugt werden, oder zähflüssige Bestandteile der Milch wie z.B. sogenannte Schlunzen (koagulierende Milch bei euterkranken Tieren) abgefangen werden, bevor derartige Verunreinigungen der Milch die Funktion der Messeinrichtung 102 und/oder der Probenentnahmeeinrichtung 301 negativ beeinträchtigen.

Das Sieb 206 kann ferner dafür ausgebildet sein, Milch, die durch die zweite Milchauslassöffnung 203 ins Innere des Behälters 107 eintritt, zu der Probenentnahmeeinrichtung 301 zu leiten. Zu diesem Zweck kann das Sieb 206 eine solche Form haben, dass es in einer Richtung von der zweiten Milchaustrittaustrittsöffnung 203 zur Probenentnahmeeinrichtung 301 schräg abfällt.

Zumindest ein Teil der Milch, die durch das Sieb 206 hindurchfließt, kann durch Kohäsionskräfte an der Unterseite des Siebs 206 gehalten werden. Da das Sieb 206 zur Probenentnahmeeinrichtung 301 hin schräg abfällt, fließt die Milch an der Unterseite des Siebs 206 entlang und wird zur Probenentnahmeeinrichtung geleitet.

In manchen Ausführungsformen kann das Sieb 206 eine konische Form aufweisen. Die Bypassleitung 209 kann in solchen Ausführungsformen durch eine Öffnung in der Spitze des Siebs 206 hindurch verlaufen. Eine Kegelachse 303 des konischen Siebs 206 verläuft durch die erste Milchauslassöffnung 201. In manchen Ausführungsformen kann die Kegelachse 303 des Siebs 206 durch den Mittelpunkt 212 der ersten Milchauslassöffnung 201 verlaufen und mit der Symmetrieachse der rotationssymmetrischen Innenwand 205 sowie der vertikalen Richtung des Bechers 106 zusammenfallen. Die Spitze des Siebs 206 weist nach oben in einer Richtung zur ersten Milchauslassöffnung 201. Durch die konische Form fällt das Sieb 206 in radialer Richtung schräg nach unten ab.

Die Probenentnahmeeinrichtung 301 kann sich in einem größeren Abstand zu der Kegelachse 303 befinden als die zweite Milchauslassöffnung 203 und so angeordnet sein, dass eine Gerade, die durch die zweite Milchauslassöffnung 203 und eine Einlassöffnung der Probeentnahmeeinrichtung 301 verläuft, die Kegelachse 303 schneidet. Dadurch kann Milch, die durch die zweite Milchauslassöffnung 203 auf das Sieb und durch das Sieb hindurch fließt, vom Sieb in radialer Richtung zur Probenentnahmeeinrichtung 301 geleitet werden.

In Ausführungsformen mit einem konischen Sieb 206 kann Milch, die durch die erste Milchauslassöffnung 206 strömt, ebenfalls an dem Sieb 206 entlang strömen. Da die Kegelachse 303 durch die erste Milchauslassöffnung 201 verläuft, trifft die Milch, die durch die erste Milchauslassöffnung 201 fließt, im Bereich der Kegelspitze auf das Sieb 206 und kann an dem Sieb entlang in radialer Richtung nach außen strömen. Ein Teil dieser Milch kann sich in Richtung zur Probenentnahmeeinrichtung 301 bewegen, so dass die Probenentnahmeeinrichtung 301 auch Milch von der ersten Milchauslassöffnung 201 erhält, insbesondere bei großen Milchflüssen. Dadurch ist sichergestellt, dass der Probenentnahmeeinrichtung zu jedem Zeitpunkt aktuelle Milch zur Verfügung gestellt wird.

Die Probenentnahmeeinrichtung 301 kann an einer Wand des Behälters 107 angeordnet sein. Milch, die an dem Sieb 206 entlang radial nach außen strömt, kann so an der Wand entlang zu der Probenentnahmeeinrichtung 301 herabfließen.

In manchen Ausführungsformen kann die Probenentnahmeeinrichtung 301 in einer Ecke des Behälters 107, beispielsweise in der in Fig. 2 durch das Bezugszeichen 215 bezeichneten Ecke, angeordnet sein. Durch die in der Ecke in einem Winkel aufeinander zulaufenden Teile der Wand des Behälters kann die Milch besonders gut zu der Probenentnahmeeinrichtung 301 geführt werden.

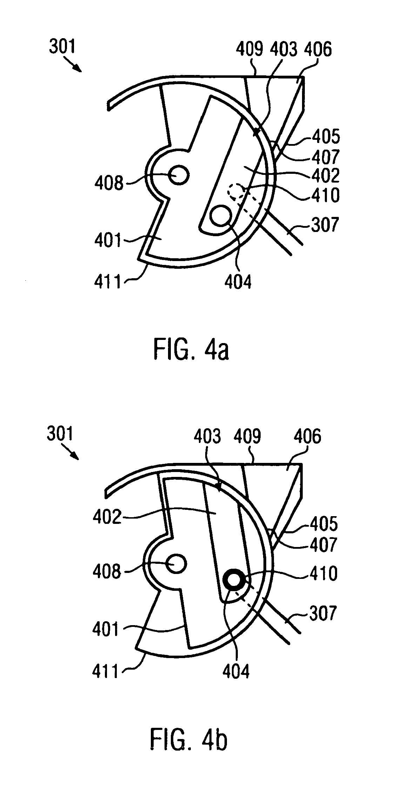

Eine Probenentnahmeeinrichtung 301, die in Ausführungsformen der vorliegenden Erfindung verwendet werden kann, wird im Folgenden mit Bezug auf die Figuren 4a und 4b beschrieben, die jeweils Schnittzeichnungen der Probenentnahmeeinrichtung 301 zeigen.

Die Probenentnahmeeinrichtung 301 umfasst einen Schieber 401, der um eine Achse 408 zwischen einer ersten Stellung (in Fig. 4a gezeigt) und einer zweiten Stellung (in Fig. 4b gezeigt) drehbar ist. Außerdem umfasst die Probenentnahmeeinrichtung 301 eine Struktur 405, die den Schieber 401 zumindest teilweise umschließt.

Der Schieber 401 weist ein Volumen 402 auf. Das Volumen 402 ist zur Aufnahme einer vorgegebenen Milchmenge geeignet. In Ausführungsformen der Erfindung kann das Volumen 402 eine Größe in einem Bereich von 0,5 bis 2 ml, beispielsweise eine Größe von 0,7 ml haben. Das Volumen 402 weist eine Einlassöffnung 403, die sich auf einer oberen Seite des Volumens 402 befindet und eine Auslassöffnung 404, die sich unterhalb von der Einlassöffnung 403 befindet, auf. Das Volumen 402 kann in manchen Ausführungsformen die Form eines Bechers haben, wobei das nach oben offene Ende des Bechers als Einlassöffnung 403 dient und die Auslassöffnung 404 in einer Seitenwand am Boden des Bechers vorgesehen ist.

Die Struktur 405 kann eine Überlaufwanne 406 aufweisen. Die Überlaufwanne 406 weist an ihrer Oberseite eine Öffnung 409 auf, die als Einlassöffnung der Probenentnahmeeinrichtung 301 dient. An der Unterseite weist die Überlaufwanne 406 eine Auslassöffnung 407 auf. Wie im Folgenden genauer erläutert wird, kann Milch durch die Auslassöffnung 407 der Überlaufwanne 406 in das Volumen 402 des Schiebers 401 eintreten, um das Volumen 402 mit Milch zu füllen. Die Überlaufwanne 406 dient dabei als ein Zwischenspeicher, in dem Milch zum Füllen des Volumens 402 bereitgehalten wird.

Das Volumen der Überlaufwanne 406 kann größer als das Volumen 402, aber ausreichend klein sein, damit überschüssige Milch, die über die Überlaufwanne 406 hinweg läuft, den Inhalt der Überlaufwanne 406 umwälzt. Beispielsweise kann das Volumen der Überlaufwanne 406 in einem Bereich von 150 Prozent bis 400 Prozent des Volumens 402 des Schiebers 401 liegen. Dadurch kann erreicht werden, dass die Milch in der Überlaufwanne 406 zu jedem Zeitpunkt eine repräsentative Probe der gerade über die Probenentnahmeeinrichtung 301 hinwegströmenden Milch ist.

In manchen Ausführungsformen kann die Überlaufwanne 406 eine Form haben, die sich nach oben, d.h. zur Öffnung 409 hin, erweitert. Dadurch kann eine besonders gute Durchmischung der Milch in der Überlaufwanne 406 erreicht werden, da eine derartige Form dabei hilft, Stauungen des Milchflusses in Winkeln der Überlaufwanne 406 zu vermindern.

Die Probenleitung 307 endet in einer Öffnung 410 der Struktur 405. Wie unten genauer ausgeführt, kann Milch in der zweiten Stellung des Schiebers 401 durch die Öffnungen 404, 410 in die Probenleitung 307 und durch die Probenleitung 307 in den Probenbehälter 105 fließen.

Die Öffnungen 404, 410 und die Probenleitung 307 können jeweils einen Durchmesser von mindestens 6 mm haben, um eine Reinigung der Probenleitung 307 und der Öffnungen 404, 410 zu vereinfachen und ein vollständiges oder teilweises Verschließen der Öffnungen 404, 410 bzw. ein Verstopfen der Probenleitung 307 zu verhindern.

In der ersten Stellung des Schiebers 401 (in Fig. 4a dargestellt) befindet sich die Einlassöffnung 403 des Schiebers 401 unter der Auslassöffnung 407 der Überlaufwanne 406. Dadurch kann Milch aus der Überlaufwanne 406 in das Volumen 402 fließen. Die Auslassöffnung 404 des Schiebers 401 und die Öffnung 410 der Probenleitung 307 sind in der ersten Stellung des Schiebers 401 nicht miteinander ausgerichtet. Stattdessen wird die Auslassöffnung 404 des Schiebers in der ersten Stellung durch eine Wand 411 der Struktur 405 verschlossen. Deshalb kann nur solange Milch aus der Überlaufwanne 406 in das Volumen 402 fließen, bis dieses vollständig mit Milch gefüllt ist.

Wenn der Schieber 401 von der ersten Stellung in die zweite Stellung (in Fig. 4b dargestellt) bewegt wird, wird die Einlassöffnung 403 des Schiebers 401 von Teilen der Struktur 405 neben der Überlaufwanne 406 unter Belassung eines relativ zur Achse des Schiebers radialen Luftspalts abgedeckt, jedoch nicht luftdicht verschlossen. Ein Einströmen von Milch in das Volumen 402 ist in diesem Zustand nicht möglich. Außerdem sind in der zweiten Stellung die Auslassöffnung 404 des Schiebers 401 und die Öffnung 410 der Probenleitung 307 miteinander ausgerichtet. Dadurch kann Milch durch die Auslassöffnung 404 des Schiebers 401 in die Probenleitung 307 fließen. Gleichzeitig kann Luft über den Luftspalt oberhalb der Einlassöffnung 403 nachfließen und damit für Druckausgleich zwischen dem Innenraum des Behälters 107 und der Probeflasche sorgen. Da in der zweiten Stellung jedoch die Einlassöffnung 403 des Schiebers 401 durch die Struktur 405 verschlossen ist, bevor die Auslassöffnung 404 geöffnet wird, fließt nur die Milchmenge, die sich bereits zuvor im Schieber 401 befunden hat, und die dem Volumen 402 des Schiebers 401 entspricht, in die Probenleitung 307.

Jedes Mal, wenn der Schieber 401 von der zweiten Stellung in die erste Stellung und wieder zurück in die zweite Stellung bewegt wird, wird deshalb durch die Probenleitung 307 eine Milchmenge, die dem Volumen 402 des Schiebers 401 entspricht, in den Probenbehälter 105 abgefüllt, und zwar unabhängig von Bedingungen wie dem momentanen Druck im Behälter 107 und dem aktuellen Milchfluss durch die Vorrichtung 100.

Auf der in den Fig. 4a und 4b dem Betrachter zugewandten Seite kann die Struktur eine in der Schnittansicht der Fig. 4a und 4b nicht dargestellte Wand aufweisen, die die Probenentnahmeeinrichtung 301 auf dieser Seite verschließt. Außerdem können um den Schieber 401 herum Seitenwände vorgesehen sein, so dass der Schieber 401 von der Struktur 405 ringsum umschlossen ist, mit Ausnahme der Öffnungen 407, 410 und ein oder zwei weiteren Öffnungen, durch die die Achse 408 des Schiebers 401 geführt wird. Für eine optimale Reinigbarkeit ist eine möglichst offene Ausführung jedoch vorzuziehen.

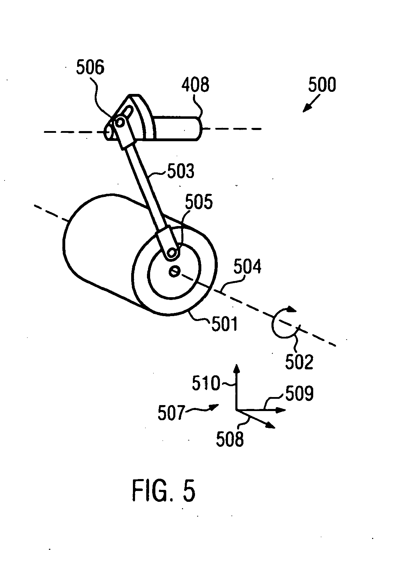

Die Probenentnahmeeinrichtung 301 kann einen Antrieb 500 zum Bewegen des Schiebers 401 zwischen der ersten und der zweiten Stellung aufweisen, der in manchen Ausführungsformen wie im Folgenden mit Bezug auf Fig. 5 beschrieben ausgebildet sein kann. I

Zur Veranschaulichung der räumlichen Anordnung der Teile des Antriebs 500 ist in Fig. 5 ein Koordinatensystem 507 mit einer ersten Koordinatenachse 508, einer zweiten Koordinatenachse 509 und einer dritten Koordinatenachse 510 gezeigt. Das Koordinatensystem 507 ist derart orientiert, dass die Achse 408 des Schiebers 401 parallel zur zweiten Koordinatenachse 509 ist.

Der Antrieb 500 umfasst einen Motor 501, der beispielsweise ein Elektromotor sein kann. Der Motor stellt eine Drehbewegung in einer Richtung, die in Fig. 5 durch einen gekrümmten Pfeil 502 veranschaulicht ist, um eine Achse 504 bereit. Die Achse 504 des Motors 501 ist parallel zur ersten Koordinatenachse 508 und damit senkrecht zur Achse 408 des Schiebers 401. Außerdem sind die Achsen 408, 504 des Motors 501 und des Schiebers 401 in Richtung der dritten Koordinatenachse 510 voneinander beabstandet.

Der Antrieb 500 umfasst eine Stange 503. Ein erstes Ende 505 der Stange 503 ist mit dem Motor 501 verbunden und exzentrisch zur Achse 504 des Motors 501 derart gelagert, dass es relativ zum Läufer des Motors sowohl um eine zur ersten Koordinatenachse 508 parallele Achse als auch um eine zur zweiten Koordinatenachse 509 parallele Achse drehbar ist.

Ein zweites Ende 506 der Stange 503 ist mit der Achse 408 des Schiebers 401 verbunden und exzentrisch zu dieser derart gelagert, dass es sowohl um eine zur ersten Koordinatenachse 508 parallele Achse als auch um eine zur zweiten Koordinatenachse 509 parallele Achse drehbar ist.

Wenn der Motor 501 um die Achse 504 rotiert, wird die gleichmäßige Drehbewegung des Motors 501 durch die Stange 503 in eine hin- und hergerichtete Drehbewegung des Schiebers 401 um die Achse 408 umgewandelt, wobei sich der Schieber 401 bei jeder Umdrehung des Motors 501 einmal von der ersten Stellung zur zweiten Stellung und wieder zurück bewegt.

Wie oben erläutert, wird jedes Mal, wenn sich der Schieber 401 von der zweiten Stellung zur ersten Stellung und wieder zurück bewegt, eine bestimmte Milchmenge, die dem Volumen 402 des Schiebers 401 entspricht, in den Probenbehälter 105 abgefüllt. Da sich der Schieber bei jeder Umdrehung des Motors 501 einmal von der ersten zur zweiten Stellung und zurück bewegt, wird somit bei jeder Motorumdrehung die bestimmte Milchmenge in den Probenbehälter 105 abgefüllt, und zwar unabhängig von der Milchmenge im Behälter 107 und dem momentanen Milchfluss durch die Vorrichtung 100. Zum Abfüllen einer gewünschten Milchmenge in den Probenbehälter 105 ist deshalb keine komplizierte Steuerung, die ein Ventil in Abhängigkeit vom Milchfluss und von der Milchmenge im Behälter 107 steuert, erforderlich. Es reicht vielmehr aus, den Motor 501 so zu steuern, dass er eine dem Verhältnis zwischen der abzufüllenden Milchmenge und der Größe des Volumen 401 des Schiebers 401 entsprechende Anzahl von Umdrehungen ausführt. Eine typische Umdrehungszahl des Motors 501 kann im Bereich von 0.3 bis 3 Umdrehungen pro Sekunde liegen.

Die Vorrichtung 100 kann eine Steuerung umfassen, die in einem Elektronik-Kompartment 111 untergebracht ist und dafür ausgebildet ist, den Antrieb 500 der Probenentnahmeeinrichtung 301 zum Durchführen einer Milchprobenentnahme zu steuern. Der Antrieb 500 kann sich ebenfalls in dem Elektronik-Kompartment 111 befinden, wobei die Achse 408 des Schiebers drehbar sowie flüssigkeits- und luftdicht durch eine Trennwand zwischen dem Elektronik-Kompartment 111 und dem Behälter 107 geführt wird.

In einigen Ausführungsformen der vorliegenden Erfindung kann die Steuerung dafür ausgebildet sein, die Probenentnahmeeinrichtung 301 in Abhängigkeit von dem von der Messeinrichtung 102 gemessenen Milchfluss derart zu steuern, dass eine für die gesamte während des Melkvorgangs abgemolkene Milch repräsentative Probe in den Probenbehälter 105 abgefüllt wird.

Beispielsweise weist der Fettgehalt von Kuhmilch während des Melkvorgangs eine relativ große Variabilität auf. Während der Fettgehalt am Anfang des Melkvorgangs nur ca. 1 % betragen kann, können am Ende des Melkvorgangs wesentlich höhere Fettgehalte von bis zu 15% vorkommen. Würde ein überproportional großer Teil der Milchprobe am Anfang des Melkvorgangs entnommen, erhielte man deshalb bei einer Messung des Fettgehalts einen Wert, der geringer ist als der Wert, den man bei einer Probe aus dem gleichmäßig durchmischten Gesamtgemelk erhält. Würde dagegen ein überproportional großer Teil der Milchprobe am Ende des Melkvorgangs entnommen, erhielte man bei einer Messung des Fettgehalts einen zu großen Wert.

Zur Entnahme einer für das Gesamtgemelk repräsentativen Probe kann die Probenentnahmeeinrichtung derart gesteuert werden, dass der Schieber 401 jeweils dann betätigt wird, wenn sich die in die Vorrichtung 100 geflossene Milchmenge um einen vorgegebenen Mengenzuwachs erhöht hat. Zu diesem Zweck kann die Steuerung durch eine zeitliche Integration des von der Messeinrichtung 102 gemessenen Milchflusses in die Vorrichtung 100, die beispielsweise numerisch durchgeführt werden kann, einen Wert der bisher in die Vorrichtung 100 geflossenen Milchmenge bestimmen.

Wenn der integrierte Milchfluss einen Startwert überschreitet und immer dann, wenn sich der integrierte Milchfluss im Vergleich zu dem Wert, bei dem zum letzten Mal eine dem Volumen 402 des Schiebers 401 entsprechende Milchmenge (im Folgenden als Subsample bezeichnet) entnommen wurde, um den vorgegebenen Mengenzuwachs erhöht hat, kann der Motor 501 derart angesteuert werden, dass er eine Umdrehung ausführt und ein Subsample in den Probenbehälter 105 abgefüllt wird.

Da jedes entnommene Subsample für ein bestimmtes abgemolkenes Quantum Milch, dessen Menge gleich dem vorgegebenen Mengenzuwachs ist, repräsentativ ist, erhält man durch Zusammenführen der einzelnen Subsamples eine für das Gesamtgemelk repräsentative Milchprobe.

Der vorgegebene Mengenzuwachs, bei dem jeweils ein Subsample entnommen wird (im Folgenden als ΔQ bezeichnet), kann aus einem Schätzwert der bei dem gemolkenen Tier zu erwartenden Milchmenge Q, einem gewünschten Probenvolumen V und dem Volumen 402 des Schiebers 401 (im Folgenden als ΔV bezeichnet) gemäß

$$\Delta Q = \Delta V * Q / V \qquad (1)$$

berechnet werden. Der Startwert, bei dem zum ersten Mal ein Subsample entnommen wird, kann gleich der Hälfte des vorgegebenen Mengenzuwachses ΔQ oder, in anderen Ausführungsformen, gleich dem vorgegeben Mengenzuwachs ΔQ sein. Die zu erwartende Milchmenge kann anhand der bisher bei dem Tier erhaltenen Milchmenge abgeschätzt werden und beispielsweise gleich der am Vortag oder beim letzten Probemelken gemolkenen Menge sein.

Wenn beispielsweise die zu erwartende Milchmenge Q = 15.000 g ist, können z.B. 50 Subsamples von jeweils ΔV = 0,7 ml entnommen werden, und zwar jeweils nach einem vorgegebenen Mengenzuwachs von ΔQ = 300 g. Der Startwert kann in diesem Beispiel 300 g / 2 = 150 g betragen. 50 Subsamples von jeweils 0,7 ml ergeben ein Probenvolumen von 35 ml, die in einen Probenbehälter 105 mit einem Volumen von 50 ml abgefüllt werden können. Stimmt die tatsächlich gemolkene Milchmenge nicht genau mit der erwarteten Milchmenge überein, schlägt sich das in einer etwas größeren oder kleineren Probenmenge im Probenbehälter 105 nieder, ohne dass der Probenbehälter 105 überläuft oder zu wenig Milch für die Analyse (Minimum typischerweise ca 20 ml) enthält.

In weiteren Ausführungsformen kann die Steuerung dafür ausgelegt sein, eine für einen Teil des Gesamtgemelks repräsentative Probe in den Probenbehälter 105 abzufüllen. Insbesondere kann die Steuerung dafür ausgelegt sein, eine für den Anfang des Melkvorgangs repräsentative Probe oder eine für das Ende des Melkvorgangs repräsentative Probe zu entnehmen.

Eine für einen Teil des Melkvorgangs repräsentative Milchprobe kann für bestimmte Inhaltsstoffe repräsentativer sein als eine Probe, die das gesamte Gemelk repräsentiert. Beispielsweise kann bei einer sich entwickelnden Euterentzündung die Zellzahl in der am Anfang des Melkvorgangs abgemolkenen Milch stark erhöht sein und sich im ersten Viertel des Gemelks klar manifestieren, während die Zellzahl, die anhand einer Probe des Gesamtgemelks gemessen wird, aufgrund des Verdünnungseffekts noch unauffällig ist.

Andererseits befinden sich gegen Ende des Melkvorgangs in der Milch bestimmte Bakterien, sogenannte Bakteriophagen, die nach Beendigung des Melkvorgangs in der in der Euterzisterne zurückbleibenden Restmilch konzentriert sind. Die Bakteriophagen bekämpfen Mikroorganismen, die eventuell in der Zwischenmelkzeit durch den Strichkanal der Zitze aufsteigen. Eine gegen Ende des Melkvorgangs gezogene Milchprobe kann eine bessere Aussage über das Vorhandensein solcher Schutzbakterien ermöglichen als eine für das Gesamtgemelk repräsentative Milchprobe.

Zur Entnahme einer für einen Teil des Melkvorgangs repräsentativen Milchprobe kann der gemäß Gleichung (1) berechnete Mengenzuwachs ΔQ entsprechend dem Anteil des Gemelks, aus dem eine Probe gezogen werden soll, verringert werden, um trotz der Entnahme einer Probe aus nur einem Teil des Gemelks das gewünschte Probenvolumen zu erhalten.

In manchen Ausführungsformen kann eine Milchprobe entnommen werden, die für 20 % des Gemelks repräsentativ ist, etwa für die ersten 20% des Gemelks oder die zuletzt abgemolkenen 20 % des Gemelks. In solchen Ausführungsformen kann der gemäß Gleichung (1) berechnete Mengenzuwachs ΔQ auf ein Fünftel verringert werden, damit das gleiche Probenvolumen in den Probenbehälter 105 abgefüllt wird.

In anderen Ausführungsformen kann eine Milchprobe entnommen werden, die für einen anderen Bruchteil des Gemelks repräsentativ ist. In solchen Ausführungsformen kann der gemäß Gleichung (1) berechnete Mengenzuwachs ΔQ auf den jeweiligen Bruchteil verringert werden.

Bei der Entnahme einer für den Anfang des Melkvorgangs repräsentativen Milchprobe kann die Anzahl der Subsamples nach oben begrenzt werden, so dass die Probenentnahme endet, sobald eine bestimmte Milchmenge abgemolken ist. Zu diesem Zweck kann die Steuerung die Anzahl der entnommenen Subsamples zählen und die Probenentnahme beenden, wenn die Anzahl der entnommenen Subsamples den oberen Grenzwert erreicht.

Bei der Entnahme einer für das Ende des Melkvorgangs repräsentativen Probe kann der Startwert, bei dem das erste Subsample entnommen wird, auf eine Differenz zwischen der gesamten zu erwartenden Milchmenge und der dem Anteil des Gemelks, für den die Milchprobe repräsentativ sein soll, entsprechenden Milchmenge gesetzt werden. Beispielsweise kann der Startwert bei einer Entnahme einer Probe aus den letzten 20% des Gemelks auf 80% der erwarteten Milchmenge gesetzt werden.

Ansonsten kann die Probenentnahme sowohl bei der Entnahme einer für den Anfang des Melkvorgangs repräsentativen Milchprobe als auch bei der Entnahme einer für das Ende des Melkvorgangs repräsentativen Milchprobe genauso durchgeführt werden, wie es oben für die Entnahme einer für das Gesamtgemelk repräsentative Probe beschrieben wurde.

Die vorliegende Erfindung ist nicht auf Ausführungsformen beschränkt, in denen, wie oben beschrieben, eine einzige Probenentnahmeeinrichtung vorgesehen ist. In manchen Ausführungsformen können mehrere Probenentnahmeinrichtungen mit Merkmalen, die denen der oben beschriebenen Probenentnahmeeinrichtung 301 entsprechen, vorgesehen sein. Jede der Probenentnahmeeinrichtungen kann durch eine ihr zugeordnete Probenleitung mit einem Probenbehälter ähnlich dem oben beschriebenen Probenbehälter 105 verbunden sein.

Um die mehreren Probenentnahmeeinrichtungen auch bei geringen Milchflüssen mit ausreichend Milch zu versorgen, kann jeder Probenentnahmeeinrichtung eine Rinne ähnlich der oben beschriebenen Rinne 202 und eine Milchauslassöffnung ähnlich der oben beschriebenen zweiten Milchauslassöffnung 203 zugeordnet sein. Die Rinnen können sich jeweils um einen Teil des Umfangs der ersten Milchauslassöffnung 201 erstrecken, und die den Probenentnahmeeinrichtungen zugeordneten Milchauslassöffnungen können so angeordnet sein, dass Milch, die durch die jeweilige Milchauslassöffnung aus der Luftabscheideeinrichtung 101 austritt, zu der ihr zugeordneten Probenentnahmeinrichtung fließt.

In Ausführungsformen, in denen, wie oben beschrieben, ein konisches Sieb 206 vorgesehen ist, können die den Probenentnahmeeinrichtungen zugeordneten Milchauslassöffnungen jeweils derart angeordnet sein, dass eine Gerade, die durch die Einlassöffnung der Probenentnahmeeinrichtung und die ihr zugeordnete Milchauslassöffnung verläuft, die Kegelachse 303 des Siebs 206 schneidet. So kann die Milch jeweils von der Milchauslassöffnung entlang des Siebs 206 zu der ihr zugeordneten Probenentnahmeeinrichtung fließen.

Die Vorrichtung kann eine Steuerung umfassen, die dafür ausgelegt ist, die mehreren Probenentnahmeeinrichtungen zur Entnahme von Milchproben während eines Melkvorgangs zu steuern, wobei die Probenentnahme wie oben beschrieben durchgeführt wird.

In einer Vorrichtung mit zwei oder mehr Probenentnahmeeinrichtungen kann eine der Probenentnahmeeinrichtungen dazu verwendet werden, eine für einen Teil des Gemelks repräsentative Milchprobe in einen mit ihr verbundenen ersten Probenbehälter zu füllen, während eine andere Probenentnahmeeinrichtung dafür verwendet werden kann, eine für das Gesamtgemelk repräsentative Milchprobe in einen mit ihr verbundenen Probenbehälter zu füllen. Die Steuerung kann dafür ausgebildet sein, die Probenentnahmeeinrichtungen entsprechend zu steuern.

Insbesondere kann eine erste Probenentnahmeeinrichtung dafür verwendet werden, eine für das Anfangsgemelk repräsentative Milchprobe, beispielsweise eine für die ersten 20% der Gesamtgemelksmenge repräsentative Milchprobe, zu entnehmen, und einem ersten Probenbehälter zuzuführen, während die zweite Probenentnahmeeinrichtung dafür verwendet wird, eine für das Gesamtgemelk repräsentative Milchprobe zu entnehmen und einem zweiten Probenbehälter zuzuführen. Der Inhalt des ersten Probenbehälters kann einem Test unterzogen werden, beispielsweise einem Mastitis-Schnelltest (Schalmtest). Dies kann entweder manuell, z.B. durch einen Landwirt, oder automatisch, mittels einer in die Vorrichtung 100 integrierten Messeinrichtung, geschehen. Anhand des Ergebnisses des Tests kann dann entschieden werden, ob der Inhalt des zweiten Probenbehälters zu einer genaueren Untersuchung in ein Labor eingeschickt wird.

Mit der Vorrichtung 100 gemäß der vorliegenden Erfindung kann, wie oben beschrieben, die Probenentnahme während des Melkvorgangs durchgeführt werden. Wenn der Melkvorgang endet, befindet sich die entnommene Milchprobe bereits im Probenbehälter 105. Für den Betrieb der Vorrichtung 100 ist es deshalb nicht notwendig, dass das Melkvakuum am Ende des Melkvorgangs noch vorhanden ist. Die Vorrichtung 100 kann somit auch in Kombination mit einer Melkmaschine mit automatischer Vakuumabschaltung und/oder automatischer Melkzeugabnahme uneingeschränkt verwendet werden.

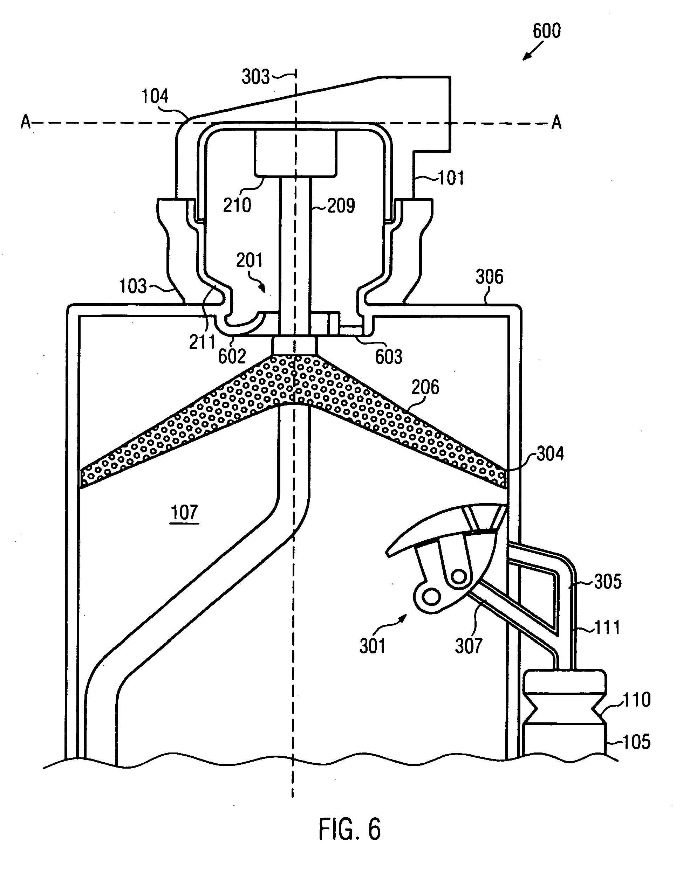

Die vorliegende Erfindung ist nicht auf Ausführungsformen beschränkt, in denen, wie in den oben beschriebenen Ausführungsformen, die nach oben offene Rinne stromaufwärts von der ersten Milchauslassöffnung 201 der Luftabscheideeinrichtung 101 angeordnet ist. In anderen Ausführungsformen kann die nach oben offene Rinne auch stromabwärts von der ersten Milchauslassöffnung 201 der Luftabscheideeinrichtung 101 angeordnet sein. Derartige Ausführungsformen werden im Folgenden mit Bezug auf die Fig. 6, 7 und 8 beschrieben.

Merkmale der mit Bezug auf die Fig. 6, 7 und 8 beschriebenen Ausführungsformen können, soweit im Folgenden nichts anderes genannt ist, denen der mit Bezug auf die Fig. 1 bis 5 beschriebenen Ausführungsformen entsprechen, wobei einander entsprechende Teile mit gleichen Bezugszeichen bezeichnet sind.

Fig. 6 zeigt eine schematische Querschnittsansicht einer Vorrichtung 600 zum Durchführen einer Messung und zur Entnahme von Milchproben aus einer Melkmaschine gemäß der vorliegenden Erfindung, wobei die Schnittebene der Fig. 6 der Schnittebene der Fig. 3 entspricht.

Die Vorrichtung 600 weist eine nach oben offene Rinne 602 auf, die unterhalb und stromabwärts von einer Milchauslassöffnung 201 der Luftabscheideeinrichtung 101 angebracht ist. Die Milchauslassöffnung 201 entspricht der ersten Milchauslassöffnung der Ausführungsformen gemäß Fig. 1 bis 5, wird aber im Folgenden der Einfachheit halber als "Milchauslassöffnung 201" bezeichnet, da die Luftabscheideeinrichtung 101 in der Ausführungsform gemäß Fig. 6 keine zweite Milchauslassöffnung aufweist.

Die Rinne 602 verläuft ringförmig um einen Bereich unterhalb des Zentrums der Milchauslassöffnung 201 herum und ist in radialer Richtung zumindest teilweise innerhalb des Rands der Milchauslassöffnung 201 angeordnet. Ein äußerer Rand der Rinne 602 ist mit der Luftabscheideeinrichtung 101 verbunden. Während in manchen Ausführungsformen der gesamte äußere Rand der Rinne 602 mit der Luftabscheideeinrichtung 101 verbunden ist, kann die Rinne 602 in anderen Ausführungsformen durch einzelne Stege, zwischen denen sich Zwischenräume befinden, mit der Luftabscheideeinrichtung 101 verbunden sein.

Die Rinne 602 weist einen Milchauslass 603 auf. Dieser kann, wie in Fig. 6 gezeigt, eine Öffnung im Boden der Rinne 602 sein. In anderen Ausführungsformen kann der Milchauslass 603 der Rinne 602 auch an einem Ende oder an einer Seite der Rinne 602 angebracht sein, so dass die Milch in einer horizontalen Richtung aus der Rinne 602 ausströmt. In solchen Ausführungsformen muss der Milchauslass 603 nicht unbedingt in Form einer Öffnung mit einem rings um die Öffnung herum verlaufenden Rand bereitgestellt werden. Alternativ kann der Milchauslass 603 auch einen Bereich der Rinne 602 umfassen, in dem der Rand der Rinne 602 eine geringere Höhe hat als im Rest der Rinne 602 oder ganz weggelassen wird, so dass die Milch in diesem Bereich aus der Rinne 602 herausläuft.

Milch, die über den Rand der Milchauslassöffnung 201 der Luftabscheideeinrichtung 101 hinweg und durch die Milchauslassöffnung 201 hindurch fließt, trifft auf die Rinne 602.

Bei kleinen Milchflüssen kann die Rinne 602 im Wesentlichen die gesamte Milch, die durch die Milchauslassöffnung 201 fließt, auffangen. Durch die Rinne 602 wird die Milch von der Rinne zum Milchauslass 603 geleitet und fließt am Milchauslass 603 aus der Rinne 602 heraus.

Bei größeren Milchflüssen kann ein Teil der Milch über den Innenrand der Rinne 602 hinweg und durch den von der Rinne 602 umschlossenen Bereich im Zentrum der Milchauslassöffnung 201 der Luftabscheideeinrichtung 101 hindurch auf das Sieb 206 und durch das Sieb 206 hindurch in den Behälter 107 strömen. Ein anderer Teil der Milch kann auch bei großen Milchflüssen durch den Milchauslass 603 fließen.

Ähnlich wie die zweite Milchauslassöffnung 203 in den oben mit Bezug auf Fig. 1 bis 5 beschriebenen Ausführungsformen ist der Milchauslass 603 der Rinne 602 derart angeordnet, dass die Milch, die durch den Milchauslass 603 aus der Rinne 602 fließt, von dem Sieb 206 zur Probenentnahmeeinrichtung 301 geleitet wird. Dadurch kann" ähnlich wie in den mit Bezug auf Fig. 1 bis 5 beschriebenen Ausführungsformen, sichergestellt werden, dass die Probenentnahmeeinrichtung 301 auch bei kleinen Milchflüssen ausreichend mit Milch versorgt wird.

Weitere Merkmale der Rinne 602, beispielsweise ihre Tiefe und/oder ihre Breite, können denen der in Fig. 2 und 3 dargestellten Rinne 202 entsprechen.

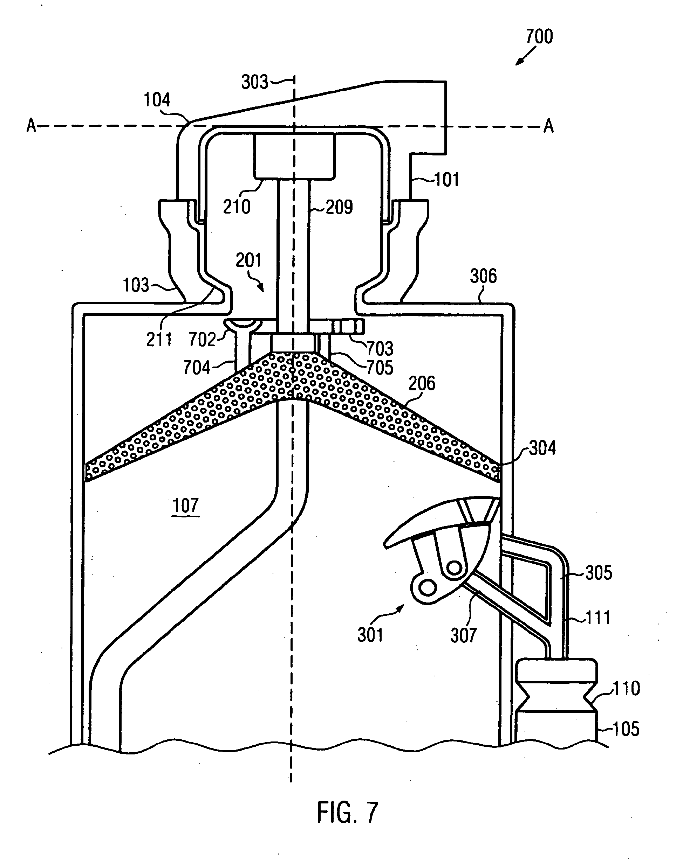

Fig. 7 zeigt eine schematische Querschnittsansicht einer Vorrichtung 700 zum Durchführen einer Messung und zur Entnahme von Milchproben aus einer Melkmaschine gemäß einer weiteren Ausführungsform der vorliegenden Erfindung, wobei die Schnittebene der Fig. 7 der Schnittebene der Fig. 3 und 6 entspricht.

Die Vorrichtung 700 umfasst eine nach oben offene Rinne 702, die stromabwärts von der Milchauslassöffnung 201 der Luftabscheideeinrichtung 101 angeordnet ist. Die Rinne 702 weist einen Milchauslass 703 auf. Ähnlich wie die Rinne 602 gemäß Fig. 6 befindet sich die Rinne 702 unterhalb der Milchauslassöffnung 201 und umschließt einen Bereich unterhalb des Zentrums der Milchauslassöffnung 201 ringförmig. In radialer Richtung ist die Rinne 702 zumindest teilweise innerhalb der Milchauslassöffnung 201 angeordnet. Anders als die Rinne 602 ist die Rinne 702 nicht an der Luftabscheideeinrichtung 101 befestigt, sondern sie ist durch unterbrochene Stege 704, 705 am Sieb 206 befestigt. Dadurch kann die Rinne 702 bei der Reinigung der Vorrichtung 700 zusammen mit dem Sieb 206 aus der Vorrichtung 700 entnommen werden, wodurch die Reinigung der Vorrichtung 700 vereinfacht wird.

Weitere Merkmale der Rinne 702 und des Milchauslasses 703 können denen der Rinne 602 und des Milchauslasses 603, die oben mit Bezug auf Fig. 6 beschrieben wurden, entsprechen.

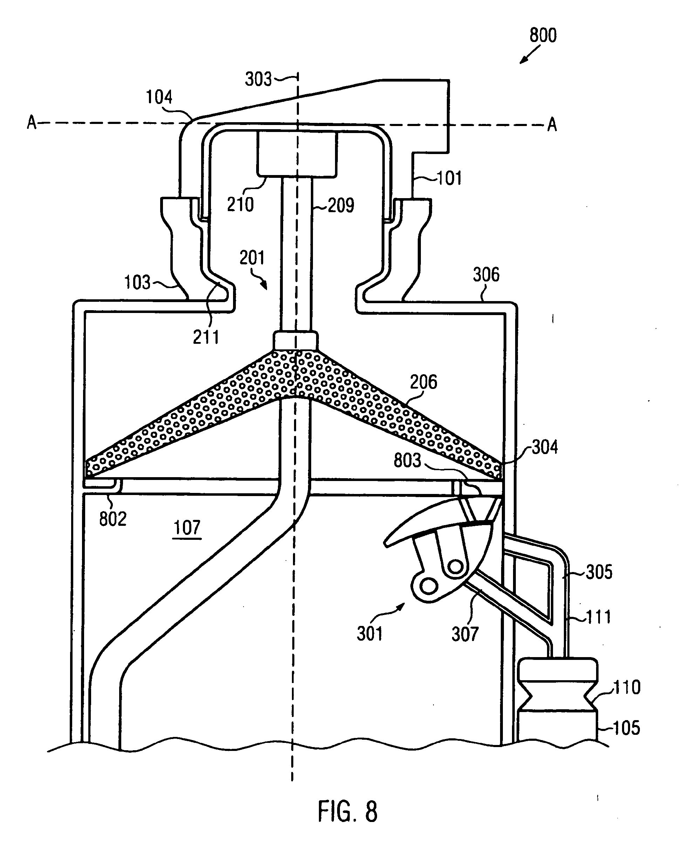

Fig. 8 zeigt eine schematische Querschnittsansicht einer Vorrichtung 800 zum Durchführen einer Messung und zur Entnahme von Milchproben aus einer Melkmaschine gemäß der vorliegenden Erfindung, wobei die Schnittebene der Fig. 8 der Schnittebene der Fig. 3, 6 und 7 entspricht.

Die Vorrichtung 800 umfasst eine nach oben offene Rinne 802. Die Rinne 802 befindet sich unterhalb und stromabwärts des Siebs 206 und oberhalb sowie stromaufwärts von der Probenentnahmeeinrichtung 301 und der Messeinrichtung 102. Die Rinne 802 befindet sich an einer Innenwand des Behälters 107, am äußeren Rand des Siebs 206, und verläuft ringförmig um den Behälter 107 herum.

Die Rinne 802 kann, wie in Fig. 8 dargestellt, an der Innenwand des Behälters 107 angebracht sein. In anderen Ausführungsformen kann die Rinne 802 auch am Sieb 206 befestigt sein, so dass sie zusammen mit dem Sieb 206 beim Reinigen der Vorrichtung 800 aus dem Behälter 800 entnommen werden kann.

Die Rinne 802 weist eine Milchauslassöffnung 803 auf, die sich am Boden der Rinne 802 befindet, und die über der Einlassöffnung der Probenentnahmeeinrichtung 301 angeordnet ist, so dass Milch, die durch die Milchauslassöffnung 803 aus der Rinne 802 herausfließt, der Probenentnahmeeinrichtung 301 zugeführt wird.

Milch, die durch die Milchauslassöffnung 201 der Luftabscheideeinrichtung 101 fließt, fließt zumindest teilweise an dem konisch geformten Sieb 206 entlang, und gelang so zum Rand des Siebs 206 und zur Wand des Behälters 107. Dort wird Milch von der Rinne 802 aufgefangen und fließt durch die Milchauslassöffnung 803 der Rinne 802 zur Probenentnahmeeinrichtung 301. Dadurch wird auch Milch, die vom Sieb 206 zunächst in eine andere Richtung als in die Richtung zur Probenentnahmeeinrichtung 301 geleitet wird, durch die Rinne 802 der Probenentnahmeeinrichtung 301 zugeführt, wodurch die Probenentnahme bei kleinen Milchflüssen verbessert werden kann.

Weitere Merkmale der Rinne 802 können denen der in Fig. 2 und 3 dargestellten Rinne 203 entsprechen.

Die vorliegende Erfindung ist nicht auf Ausführungsformen beschränkt, in denen die Probenentnahmeeinrichtung 301 im oberen Teil des Behälters 107 angeordnet ist. In anderen Ausführungsformen kann sich die Probenentnahmeeinrichtung 301 auch an einer anderen Position befinden, beispielsweise im unteren Teil des Behälters 107 oder außerhalb des Behälters 107. In solchen Ausführungsformen kann die Probenentnahmeeinrichtung 301 durch einen Schlauch oder ein Rohr, dessen eines Ende an oder in der Nähe in funktionaler Ankoppelung zu der Einlassöffnung der Probenentnahmeeinrichtung 301 angebracht ist und dessen anderes Ende am Rand des Behälters 107 unterhalb des Siebs 206 (an der Stelle, an der sich gemäß Fig. 3, 6, 7 und 8 die Probenentnahmeeinrichtung 301 befindet) angeordnet ist, mit Milch, die stromaufwärts von der Messeinrichtung 102 entnommen wird, versorgt werden.

**Patentansprüche**

1.  Vorrichtung (100, 600, 700, 800) zum Durchführen mindestens einer Messung und zur Entnahme von Milchproben aus einer Melkmaschine, wobei die Vorrichtung von Milch durchströmbar ist und umfasst:

eine Luftabscheideeinrichtung (101), die dafür ausgelegt ist, die Milch von Luft, mit der die Milch vermischt ist, zu trennen;

eine Messeinrichtung (102), die stromabwärts von der Luftabscheideeinrichtung (101) angeordnet, durch eine erste Milchauslassöffnung (201) der Luftabscheideeinrichtung (101) mit der Luftabscheideeinrichtung (101) verbunden und dafür ausgelegt ist, eine oder mehrere Messungen mit der die Vorrichtung (100, 600, 700, 800) durchströmenden Milch durchzuführen;

eine Probenentnahmeeinrichtung (301), die dafür ausgelegt ist, Milch einem Probenbehälter (105) zuzuführen; **gekennzeichnet durch**

eine nach oben offene Rinne (202, 602, 702, 802), die stromaufwärts von der Messeinrichtung (102) angeordnet ist und dafür ausgelegt ist, zumindest einen Teil der Milch, die in der Luftabscheideeinrichtung (101) von der mit ihr vermischten Luft getrennt wurde, aufzunehmen und derart zu leiten, dass sie zumindest teilweise zur Probenentnahmeeinrichtung (301) fließt.

2. Vorrichtung (100) nach Anspruch 1, wobei die Luftabscheideeinrichtung (101) eine zweite Milchauslassöffnung (203) umfasst, die Probenentnahmeeinrichtung (301) so angeordnet ist, dass Milch, die aus der zweiten Milchauslassöffnung (203) austritt, zur Probenentnahmeeinrichtung (301) fließt und die nach oben offene Rinne (202) an einem stromabwärts gelegenen Ende (103) der Luftabscheideeinrichtung (101) und stromaufwärts von der ersten Milchauslassöffnung (201) angeordnet ist, und dafür ausgelegt ist, Milch zu der zweiten Milchauslassöffnung (203) der Luftabscheideeinrichtung (101) zu leiten.

3. Vorrichtung (100) nach Anspruch 2, wobei eine Tiefe (302) und/oder eine Breite (215) der Rinne (202) von einem von der zweiten Milchauslassöffnung (203) abgewandtem Ende (207) der Rinne (202) zur zweiten Milchauslassöffnung (203) hin zunimmt.

4. Vorrichtung (100) nach Anspruch 1, wobei die Luftabscheideeinrichtung (101) umfasst:

einen Becher (106) mit einer Milcheinlassöffnung (204), durch die Milch in einer zu einer Innenwand (205) des Bechers (106) tangentialen Richtung in den Becher (106) eintritt;

wobei sich die nach oben offene Rinne (202) sowie die erste (201) und die zweite (203) Milchauslassöffnung im Boden (211) des Bechers (106) befinden;

wobei die nach oben offene Rinne (202) entlang einem Umfang der ersten Milchauslassöffnung (201) verläuft; und

wobei die erste Milchauslassöffnung (201) im Zentrum des Bodens (211) des Bechers (106) angeordnet ist.

5. Vorrichtung (100) nach einem der Ansprüche 2 bis 4, umfassend:

ein Sieb (206), das stromabwärts von der ersten (201) und der zweiten (203) Milchauslassöffnung angeordnet ist und in einer Richtung von der zweiten Milchauslassöffnung (203) zur Probenentnahmeeinrichtung (301) schräg abfällt, so dass Milch, die durch die zweite Milchauslassöffnung (203) aus der Luftabscheideeinrichtung (101) austritt, an der Unterseite des Siebs (206) entlang zur Probenentnahmeeinrichtung (301) fließt.

6. Vorrichtung (600, 700, 800) nach Anspruch 1, wobei die Rinne (602, 702, 802) stromabwärts von der ersten Milchauslassöffnung (201) angeordnet ist.

7. Vorrichtung (100, 600, 700, 800) nach einem der vorhergehenden Ansprüche, wobei die Messeinrichtung (102) einen Behälter (107) zur Zwischenspeicherung von Milch während der Messung umfasst.

8. Vorrichtung (100, 600, 700, 800) nach Anspruch 7, wobei sich zumindest ein Teil der Probenentnahmeeinrichtung (301) in einem der Luftabscheideeinrichtung (101) zugewandten Teil des Behälters (107) befindet.

9. Vorrichtung (100, 600, 700, 800) nach einem der Ansprüche 7 und 8, wobei der Probenbehälter (105) neben dem Behälter (107) angeordnet ist.

10. Vorrichtung (100, 600, 700, 800) nach einem der vorhergehenden Ansprüche, wobei die Probenentnahmeeinrichtung (301) umfasst:

einen Schieber (401) mit einem Volumen (402) zur Aufnahme einer vorgegebenen Milchmenge sowie einer Einlassöffnung (403) und einer Auslassöffnung (404), wobei der Schieber (401) zwischen einer ersten und einer zweiten Stellung beweglich ist;
einen Antrieb (500) zum Bewegen des Schiebers (401) zwischen der ersten und der zweiten Stellung; und
eine Struktur (405), die die Auslassöffnung (404) verschließt und die Einlassöffnung (403) freigibt, wenn sich der Schieber (401) in der ersten Stellung befindet, und die die Einlassöffnung (403) verschließt und die Auslassöffnung (404) freigibt, wenn sich der Schieber (401) in der zweiten Stellung befindet, so dass Milch aus dem Volumen (402) in den Probenbehälter (105) fließt.

11. Vorrichtung (100, 600, 700, 800) nach Anspruch 10, wobei der Schieber (401) durch eine Drehbewegung zwischen der ersten und der zweiten Stellung beweglich ist.

12. Vorrichtung (100, 600, 700, 800) nach Anspruch 10 oder 11, wobei die Messeinrichtung (102) zur Messung eines Milchflusses ausgebildet ist und die Probenentnahmeeinrichtung (301) eine Steuerung umfasst, die dafür ausgelegt ist, den Schieber (401) jeweils dann zu betätigen, wenn sich die geflossene Milchmenge um einen vorgegebenen Mengenzuwachs erhöht hat.

13. Vorrichtung (100, 600, 700, 800) nach einem der Ansprüche 10 bis 12, wobei die Struktur (405) eine Überlaufwanne (406) mit einer Auslassöffnung (407) umfasst, die so angeordnet ist, dass in der ersten Stellung des Schiebers (401) Milch aus der Auslassöffnung (407) der Überlaufwanne (406) in das Volumen (402) des Schiebers (401) fließt.

14. Vorrichtung (100, 600, 700, 800) nach einem der vorhergehenden Ansprüche, die ferner Mittel (305) zum Druckausgleich zwischen dem Probenbehälter (105) und der Umgebung der Probeentnahmeeinrichtung (301) umfasst.

15. Vorrichtung (100, 600, 700, 800) nach einem der vorhergehenden Ansprüche, die ferner eine zweite Probeentnahmeeinrichtung umfasst, die dafür ausgelegt ist, Milch einem zweiten Probenbehälter zuzuführen und so angeordnet ist, dass Milch, die aus der Luftabscheideeinrichtung (101) austritt, zur zweiten Probenentnahmeeinrichtung fließt, insbesondere mit einer Steuerung, die dafür ausgelegt ist, die erste und die zweite Probenentnahmeeinrichtung während verschiedener Zeitabschnitte eines Melkvorgangs zu betätigen.

## Claims

1. A device (100, 600, 700, 800) for carrying out at least one measurement and for taking milk samples from a milking machine, wherein the device allows milk to flow therethrough and comprises:

   an air separation device (101) configured for separating the milk from air with which the milk is mixed;
   a measurement device (102) which is arranged downstream of the air separation device (101), connected to the air separation device (101) through a first milk outlet opening (201) of the air separation device (101) and configured for carrying out one or a plurality of measurements with the milk flowing through the device (100, 600, 700, 800);
   a sampling device (301) configured for supplying milk to a sample container (105);
   **characterized by**
   an upwardly open channel (202, 602, 702, 802) arranged upstream of the measurement device (102) and configured for accommodating at least a part of the milk which has been separated from the intermixed air in the air separation device (101) and for conducting said milk such that it flows at least partially to the sampling device (301).

2. The device (100) according to claim 1, wherein the air separation device (101) comprises a second milk outlet opening (203), the sampling device (301) is arranged such that milk exiting the second milk outlet opening (203) flows to the sampling device (301) and the upwardly open channel (202) is arranged at a downstream end (103) of the air separation device (101) and upstream of the first milk outlet opening (201) and configured for conducting milk to the second milk outlet opening (203) of the air separation device (101).

3. The device (100) according to claim 2, wherein a depth (302) and/or a width (215) of the channel (202) increases from an end (207) of the channel (202) facing away from the second milk outlet opening (203) to the second milk outlet opening (203).

4. The device (100) according to claim 1, wherein the air separation device (101) comprises:

a cup (106) with a milk inlet opening (204) through which milk enters the cup (106) in a direction tangential to an inner wall (205) of the cup (106);
wherein the upwardly open channel (202) as well as the first (201) and the second (203) milk outlet opening are located in the bottom (211) of the cup (106); and
wherein the upwardly open channel (202) extends along a circumference of the first milk outlet opening (201); and wherein the first milk outlet opening (201) is arranged at the center of the bottom (211) of the cup (106).

5. The device (100) according to one of the claims 2 to 4, comprising:

a strainer (206) arranged downstream of the first (201) and the second (203) milk outlet opening and sloping obliquely in a direction from the second milk outlet opening (203) towards the sampling device (301), so that milk exiting the air separation device (101) through the second milk outlet opening (203) flows along the lower surface of the strainer (206) to the sampling device (301).

6. The device (600, 700, 800) according to claim 1, wherein the channel (602, 702, 802) is arranged downstream of the first milk outlet opening (201).

7. The device (100, 600, 700, 800) according to one of the preceding claims, wherein the measurement device (102) comprises a container (107) for intermediately storing milk during the measurement.

8. The device (100, 600, 700, 800) according to claim 7, wherein at least a part of the sampling device (301) is located in a part of the container (107) facing the air separation device (101).

9. The device (100, 600, 700, 800) according to one of the claims 7 and 8, wherein the sample container (105) is arranged in side-by-side relation with the container (107).

10. The device (100, 600, 700, 800) according to one of the preceding claims, wherein the sampling device (301) comprises:

a slide (401) with a volume (402) for accommodating a predetermined milk quantity as well as with an inlet opening (403) and an outlet opening (404), the slide (401) being movable between a first and a second position;
a drive (500) for moving the slide (401) between the first and the second position; and
a structure (405) which closes the outlet opening (404) and opens the inlet opening (403) when the slide (401) occupies the first position, and which closes the inlet opening (403) and opens the outlet opening (404) when the slide (401) occupies the second position, so that milk flows from the volume (402) into the sample container (105).

11. The device (100, 600, 700, 800) according to claim 10, wherein the slide (401) is movable between the first position and the second position by a rotary motion.

12. The device (100, 600, 700, 800) according to claim 10 or 11, wherein the measurement device (102) is configured for measuring a milk flow and the sampling device (301) includes a control means configured for operating the slide (401) whenever the milk quantity flown has increased by a predetermined volume increase.

13. The device (100, 600, 700, 800) according to one of the claims 10 to 12, wherein the structure (405) includes an overflow trough (406) with an outlet opening (407), which is arranged such that, at the first position of the slide (401), milk flows out of the outlet opening (407) of the overflow trough (406) into the volume (402) of the slide (401).

14. The device (100, 600, 700, 800) according to one of the preceding claims, further comprising means (305) for equalizing the pressure between the sample container (105) and the surroundings of the sampling device (301).

15. The device (100, 600, 700, 800) according to one of the preceding claims, further comprising a second sampling device configured for supplying milk to a second sample container and arranged such that milk which exits the air separation device (101) flows to the second sampling device, in particular comprising a control means configured for operating the first and the second sampling device during various phases of a milking process.

**EP 2 706 837 B1**

**Revendications**

1.  Appareillage (100, 600, 700, 800) destiné à effectuer au moins une mesure et à prélever des échantillons de lait en provenance d'une machine de traite, l'appareillage pouvant être traversé par un écoulement de lait et comprenant :

    un dispositif séparateur d'air (101), qui est conçu pour séparer du lait, de l'air avec lequel est mélangé le lait ;
    un dispositif de mesure (102), qui est agencé en aval du dispositif séparateur d'air (101), est relié au dispositif séparateur d'air (101) par l'intermédiaire d'une première ouverture de sortie de lait (201) du dispositif séparateur d'air (101), et est conçu pour effectuer une ou plusieurs mesures avec le lait s'écoulant à travers l'appareillage (100, 600, 700, 800) ;
    un dispositif de prélèvement d'échantillons (301), qui est conçu pour amener du lait à un récipient d'échantillon (105) ;
    **caractérisé par**
    une goulotte (202, 602, 702, 802) ouverte vers le haut, qui est agencée en amont du dispositif de mesure (102), et est conçue pour recevoir au moins une partie du lait ayant été séparé de l'air mélangé avec lui, dans le dispositif séparateur d'air (101), et pour le diriger de manière à ce qu'il s'écoule au moins en partie vers le dispositif de prélèvement d'échantillons (301).

2.  Appareillage (100) selon la revendication 1, dans lequel le dispositif séparateur d'air (101) comporte une deuxième ouverture de sortie de lait (203), le dispositif de prélèvement d'échantillons (301) est agencé de manière telle que du lait, qui sort de la deuxième ouverture de sortie de lait (203), s'écoule vers le dispositif de prélèvement d'échantillons (301), et la goulotte (202) ouverte vers le haut est agencée à une extrémité aval (103) du dispositif séparateur d'air (101), et en amont de la première ouverture de sortie de lait (201), et est conçue pour diriger du lait vers la deuxième ouverture de sortie de lait (203) du dispositif séparateur d'air (101).

3.  Appareillage (100) selon la revendication 2, dans lequel la profondeur (302) et/ou une largeur (215) de la goulotte (202) augmentent en direction de la deuxième ouverture de sortie de lait (203), à partir d'une extrémité (207) de la goulotte (202), qui est éloignée de la deuxième ouverture de sortie de lait (203).

4.  Appareillage (100) selon la revendication 1, dans lequel le dispositif séparateur d'air (101) comprend :

    un godet (106) avec une ouverture d'entrée de lait (204) par laquelle du lait pénètre dans le godet (106), dans une direction tangentielle à une paroi intérieure (205) du godet (106) ; appareillage
    dans lequel la goulotte (202) ouverte vers le haut, ainsi que la première (201) et la deuxième (203) ouvertures de sortie de lait se trouvent dans le fond (211) du godet (106) ;
    dans lequel la goulotte (202) ouverte vers le haut s'étend le long d'une périphérie de la première ouverture de sortie de lait (201) ; et
    dans lequel la première ouverture de sortie de lait (201) est agencée au centre du fond (211) du godet (106).

5.  Appareillage (100) selon l'une des revendications 2 à 4, comprenant :

    un tamis (206) qui est agencé en aval de la première (201) et de la deuxième (203) ouvertures de sortie de lait, et est d'une inclinaison descendante dans une direction allant de la deuxième ouverture de sortie de lait (203) vers le dispositif de prélèvement d'échantillons (301), de sorte que du lait sortant par la deuxième ouverture de sortie de lait (203) du dispositif séparateur d'air (101), s'écoule sur le côté inférieur du tamis (206) vers le dispositif de prélèvement d'échantillons (301).

6.  Appareillage (600, 700, 800) selon la revendication 1, dans lequel la goulotte (602, 702, 802) est agencée en aval de la première ouverture de sortie de lait (201).

7.  Appareillage (100, 600, 700, 800) selon l'une des revendications précédentes, dans lequel le dispositif de mesure (102) comprend un récipient (107) pour un stockage intermédiaire de lait pendant la mesure.

8.  Appareillage (100, 600, 700, 800) selon la revendication 7, dans lequel au moins une partie du dispositif de prélèvement d'échantillons (301) se trouve dans une partie du récipient (107) dirigée vers le dispositif séparateur d'air (101).

9.  Appareillage (100, 600, 700, 800) selon l'une des revendications 7 ou 8, dans lequel le récipient d'échantillon (105) est agencé à côté du récipient (107).

10. Appareillage (100, 600, 700, 800) selon l'une des revendications précédentes, dans lequel le dispositif de prélèvement d'échantillons (301) comprend :

un tiroir (401) présentant un volume (402) destiné à recevoir une quantité prédéterminée de lait, ainsi qu'une ouverture d'entrée (403) et une ouverture de sortie (404), le tiroir (401) étant mobile entre une première et une deuxième position ;
un entraînement (500) pour déplacer le tiroir (401) entre la première et la deuxième position ; et
une structure (405) qui ferme l'ouverture de sortie (404) et dégage ou libère d'ouverture d'entrée (403), lorsque le tiroir (401) se trouve dans la première position, et qui ferme l'ouverture d'entrée (403) et libère ou dégage l'ouverture de sortie (404), lorsque le tiroir (401) se trouve dans la deuxième position, de sorte que du lait s'écoule du volume (402) dans le récipient d'échantillon (105).

11. Appareillage (100, 600, 700, 800) selon la revendication 10, dans lequel le tiroir (401) est mobile entre la première et la deuxième position, par un mouvement de rotation.

12. Appareillage (100, 600, 700, 800) selon la revendication 10 ou la revendication 11, dans lequel le dispositif de mesure (102) est configuré pour mesurer un débit ou flux de lait, et le dispositif de prélèvement d'échantillons (301) comprend une commande qui est conçue pour actionner le tiroir (401) respectivement lorsque la quantité de lait écoulée a augmenté d'un accroissement de quantité prescrit.

13. Appareillage (100, 600, 700, 800) selon l'une des revendications 10 à 12, dans lequel la structure (405) comprend une cuvette de débordement (406) avec une ouverture de sortie (407), qui est agencée de manière telle que dans la première position du tiroir (401), du lait s'écoule à travers l'ouverture de sortie (407) de la cuvette de débordement (406) dans le volume (402) du tiroir (401).

14. Appareillage (100, 600, 700, 800) selon l'une des revendications précédentes, qui comprend, par ailleurs, des moyens (305) pour la compensation de pression entre le récipient d'échantillon (105) et l'environnement du dispositif de prélèvement d'échantillons (301).

15. Appareillage (100, 600, 700, 800) selon l'une des revendications précédentes, qui comprend, par ailleurs, un deuxième dispositif de prélèvement d'échantillons conçu pour amener du lait à un deuxième récipient d'échantillon, et agencé de manière à ce que du lait sortant du dispositif séparateur d'air (101), s'écoule vers le deuxième dispositif de prélèvement d'échantillons, notamment
avec une commande, qui est conçue pour actionner le premier et le deuxième dispositif de prélèvement d'échantillons pendant des intervalles de temps différents d'une phase ou opération de traite.

FIG. 1

FIG. 2

FIG. 3

FIG. 4a

FIG. 4b

FIG. 5

600

303

104

A — — — — — — — — — — — — — — — — A

210   209

101

201

103

306

211
602   603

206

304

107

305

301   307   111

110
105

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 252531 A1
- EP 0643292 A2
- EP 0134836 A
- DE 102008057819 A1